# EUROPEAN PATENT SPECIFICATION

(11) **EP 1 701 623 B1**
(45) Date of publication and mention of the grant of the patent: **14.12.2016**
(21) Application number: 05711257.5
(22) Date of filing: 05.01.2005
(51) Int. Cl.: A23L 3/3508, A23B 4/20, A23B 4/24, A23B 4/30

(54) **METHODS FOR WASHING POULTRY DURING PROCESSING WITH MEDIUM CHAIN PEROXYCARBOXYLIC ACID COMPOSITIONS**
VERFAHREN ZUM WASCHEN VON GEFLÜGEL WÄHREND DER VERARBEITUNG MIT ZUSAMMENSETZUNGEN, DIE MITTELKETTIGER PEROXICARBONSÄURE
PROCEDES DE LAVAGE DE VOLAILLE DURANT LE TRAITEMENT AVEC DES COMPOSITIONS D'ACIDE PEROXYCARBOXYLIQUE A CHAINE MOYENNE

(30) Priority: 09.01.2004 US 754396; 04.01.2005 US 30271
(43) Date of publication of application: 20.09.2006
(73) Proprietor: ECOLAB INC., St. Paul, MN 55102-2233 (US)
(72) Inventor: MAN, Victor F., St. Paul, MN 55108 (US); MAGNUSON, Joshua, P., St.Paul, MN 55105 (US); HILGREN, John, D., Shoreview, MN 55116 (US)
(74) Representative: Godemeyer Blum Lenze Patentanwälte Partnerschaft mbB - werkpatent
(86) International application number: PCT/US2005/000147
(87) International publication number: WO 2005/067741

(56) References cited:
- EP-A- 0 985 349
- WO-A-02/054866
- WO-A-02/060280

## Description

### Field of the Invention

The present invention relates to methods for reducing microbial contamination on poultry, or on surfaces used in processing poultry, employing compositions including medium chain peroxycarboxylic acid, and to the compositions. The methods include applying a medium chain peroxycarboxylic acid composition to poultry or to the surfaces.

### Backgound of the Invention

All poultry carcasses entering the processing environment are contaminated with microorganisms, some with pathogenic bacteria such as *Salmonella.* Fecal matter and dirt are the main sources of this contamination. As a result of such contamination, poultry is typically washed at any of several steps during the process of converting a live bird to an edible food product. Such washing aims to remove dirt, offal, blood, viscera, other debris, and microbes from the poultry. Removing or reducing microbes aids the safe storage and consumption of poultry, yet many existing washing procedures fail to significantly reduce the microbe burden on poultry. The potential for poultry skin to become cross-contaminated is worsened by the ability of all types of microorganisms to adhere within only 15 seconds of contact. Once in the processing environment, a significant number of carcasses can become cross-contaminated with pathogens during handling, scalding, mechanical processing, and chilling. Current methods for many of these procedures also fail to significantly reduce the microbe burden on poultry.

Water used for washing or these other procedures is often used repeatedly over time, which provides yet another opportunity for spreading, rather than reducing, microbial burden on poultry. For example, the water becomes contaminated with organic matter and microbes from the poultry, and the organic matter provides nutrients for microbial growth in the water over time or through additional use. These microbes can grow on and contaminate additional poultry and processing equipment. In particular, water left untreated in a submersion bath tends to decontaminate poultry early in a shift but contaminates poultry later in the shift. In fact, such water has been identified as a potential source of coliform, *E. coli* and *Salmonella* contamination or cross contamination during poultry processing. *Salmonella* and other microorganisms are generally undesirable to the poultry, the water, and can cause buildup on all water contact surfaces of slime or biofilm, which requires frequent cleaning to remove.

Microbial contamination or cross contamination of poultry via water continues to be a major concern for poultry processors and end users. Although washing, cooling, or heating poultry carcasses with water can reduce potential contamination, the processing water can also serve as a source of contamination or cross contamination. If pathogenic microorganisms in water are not removed, inactivated or otherwise controlled, they can spread to other poultry, potentially contaminating them. Further, handling or processing steps that pool many individual poultry parts tend to increase the risk that a single contaminated item may contaminate the entire lot. Immersing or spray-washing poultry in fresh water can help reduce surface populations of microorganisms. However sterilization by repeated washing, even with sterile water, cannot be achieved because microorganisms within tissues of poultry remain in place.

The addition of antimicrobial agents to wash or process water can inactivate vegetative bacteria cells in water, helping avoid contamination. Ideally, an antimicrobial agent or compound used in such a system will have several important properties in addition to its antimicrobial efficacy. The compound or agent should have no technical effect on the final food product. Residual activity implies the presence of a film of antimicrobial material which will continue to have antimicrobial effect which may require further rinsing of the food product. The antimicrobial agent can also be odor free to prevent transfer of undesirable odors onto food stuffs. If direct food contact occurs, the antimicrobial agent should also be composed of food additive materials which will not affect food wholesomeness, nor affect humans should incidental ingestion result. In addition, the antimicrobial agent can be composed of naturally occurring or innocuous ingredients, which are chemically compatible with the environment and cause no concerns for toxic residues within the water.

In the past, poultry wash or process waters have generally been treated with chlorinated compounds, organic acids, acidified sodium chlorite, trisodium phosphate, or ozone. Generally, these materials are effective in reducing microbial contamination on poultry. However, the use rate of these antimicrobials is very high because they are not effective at low concentrations or they tend to be rapidly consumed by the high organic load included with the poultry. Excessive chlorination of food processing water with hypochlorite has prompted concern over production of toxic or carcinogenic organochlorine compounds and other by-products.

Further, the efficacy of conventional antimicrobial agents on the surface of poultry is often limited. For example, it has been reported that, generally, concentrations of more than 4 wt-% of organic acids or of 5 to 10 wt-% of trisodium phosphate are required to effectively reduce contamination of poultry skin by S. *typhimurium.* Antimicrobial agents such as peroxides or lactic acid can result in discoloring, bleaching, or bloating of poultry tissue.

The EPA approved a peroxyacetic acid-based composition in 1996 for controlling microbial growth and reducing biofilm formation in fruit and vegetable transport or process waters. From a historical perspective, peroxyacetic acid has been used for food contact surface sanitizing, aseptic packaging and medical device cold-sterilization. In addition to its biocidal properties, the environmentally-friendly decomposition byproducts and good stability in the presence of organic matter helped gain acceptance of this technology among fruit and vegetable packers, handlers, and processors. Such conventional peroxycarboxylic acid compositions typically include short chain peroxycarboxylic acids or mixtures of short chain peroxycarboxylic acids and medium chain peroxycarboxylic acids (see, e.g., U.S. Patent Nos. 5,200,189, 5,314,687, 5,409,713, 5,437,868, 5,489,434, 6,674,538, 6,010,729, 6,111,963, and 6,514,556). Further examples for conventional peroxycarboxylic acid compositions are provided in WO 02/054866 A1, which relates to compositions including peroxyacetic acid and peroxyoctanoic acid and methods for reducing microbial contamination on poultry, and WO 02/060280 A2, which relates to a method and system for reducing microbial burden on a food product by contacting the food product with an antimicrobial agent comprising peroxycarboxylic acid, fatty acid, halogen-containing antimicrobial agent, quaternary ammonium antimicrobial agent, peroxide, condensed phosphate, or mixtures thereof; and irradiating the food product.

Nevertheless, there remains a need for improved antimicrobial compositions for addition to waters used for washing or processing poultry.

### Summary of the Invention

The present invention relates to methods for reducing microbial contamination on poultry employing compositions including medium chain peroxycarboxylic acid, and to the compositions. The methods include applying a medium chain peroxycarboxylic acid composition to poultry. The compositions and methods of the invention provide an antimicrobial agent useful in water for washing or processing poultry, that has a high degree of antimicrobial efficacy, and that is safely ingestible by humans while imposing no unacceptable environmental incompatibility.

The compositions of the invention can be employed in methods for reducing microbial contamination on poultry and in water used for washing or processing poultry. These methods include applying to the poultry during processing a medium chain peroxycarboxylic acid antimicrobial composition, for example in an amount and time sufficient to reduce the microbial population. The composition can be applied by methods including submersing, rinsing, spraying, or air chilling the poultry, or a combination of these routes. During processing, the composition can be applied to whole, dismembered, portioned, or boned poultry.

In an embodiment, the method includes recovering a medium chain peroxycarboxylic acid antimicrobial composition previously applied to poultry. The recovered composition can be treated by adding a sufficient amount of a medium chain peroxycarboxylic acid to yield a recycled medium chain peroxycarboxylic acid antimicrobial composition. The recycled medium chain composition includes a reduced level of microbes, such as human pathogens, and can be disposed of more safely. Alternatively, the recycled medium chain composition can be applied to poultry during processing.

In an embodiment, the antimicrobial concentrate composition comprises: a medium chain peroxycarboxylic acid composition effective for reducing the microbial burden on a surface of poultry; the composition comprising:
0.5 to 5 wt-% peroxyoctanoic acid;
1 to 10 wt-% octanoic acid;
5 to 76.5 wt-% water;
1 to 20 wt-% anionic surfactant;
5 to 10 wt-% oxidizing agent;
15 to 35 wt-% inorganic acid; and
1 to 5 wt-% sequestrant;
the composition being in the form of a microemulsion.

### Detailed Description of the Invention

### Definitions

As used herein, the phrase "medium chain carboxylic acid" refers to a carboxylic acid that: 1) has reduced or is lacking odor compared to the bad, pungent, or acrid odor associated with an equal concentration of small chain carboxylic acid, and 2) has a critical micellar concentration greater than 1 mM in aqueous buffers at neutral pH. Medium chain carboxylic acids exclude carboxylic acids that are infinitely soluble in or miscible with water at 20 °C. Medium chain carboxylic acids include carboxylic acids with boiling points (at 760 mm Hg pressure) of 180 to 300 °C. Medium chain carboxylic acids include carboxylic acids with boiling points (at 760 mm Hg pressure) of 200 to 300 °C. Medium chain carboxylic acids include those with solubility in water of less than 1 g/L at 25 °C. Examples of medium chain carboxylic acids include pentanoic acid, hexanoic acid, heptanoic acid, octanoic acid, nonanoic acid, decanoic acid, undecanoic acid, and dodecanoic acid.

As used herein, the phrase "medium chain peroxycarboxylic acid" refers to the peroxycarboxylic acid form of a medium chain carboxylic acid.

As used herein, the phrase "short chain carboxylic acid" refers to a carboxylic acid that: 1) has characteristic bad, pungent, or acrid odor, and 2) is infinitely soluble in or miscible with water at 20 °C. Examples of short chain carboxylic acids include formic acid, acetic acid, propionic acid, and butyric acid.

As used herein, the phrase "short chain peroxycarboxylic acid" refers to the peroxycarboxylic acid form of a short chain carboxylic acid.

As used herein, the term "solubilizer" refers to a component of the present compositions to that makes soluble or increases the solubility in a carrier (e.g., water) of the medium chain carboxylic acid, medium chain peroxycarboxylic acid, or mixture thereof. For example, the solubilizer can keep a composition including medium chain carboxylic acid, medium chain peroxycarboxylic acid, or mixture thereof in solution or can keep the composition finely and evenly dispersed under ordinary storage conditions without forming a separate layer. The solubilizer can, for example, solubilize a medium chain carboxylic acid to an extent sufficient to allow it to react with an oxidizing agent, such as hydrogen peroxide. A solubilizer can be identified by a test that measures phase separation under ordinary storage conditions, such as room temperature, 100 °F, or 60 °C. As used herein, the term "solubilizer" does not include short chain carboxylic acids; they are not solubilizers.

As used herein, the term "microemulsion" refers to a thermodynamically stable dispersion of one liquid phase into another stabilized by an interfacial film of surfactant. The dispersion can be oil-in-water or water-in-oil. Microemulsions are typically clear solutions when the droplet diameter is approximately 100 nanometers or less. The present microemulsion composition may be a shear thinning viscoelastic gel that has a blue tyndall appearance.

As used herein, the phrases "blue tyndall appearance" or "blue tyndall" refer to a bluish hue due to scattering of blue light or the blue region of the light spectrum.

As used herein, the phrases "viscoelastic gel" and "viscoelastic liquid" refer to a liquid composition that exhibits both viscous and elastic characteristics or responses, which is indicative of long range order or structure.

As used herein, a composition or combination "consisting essentially" of certain ingredients refers to a composition including those ingredients and lacking any ingredient that materially affects the basic and novel characteristics of the composition or method. The phrase "consisting essentially of" excludes from the claimed compositions and methods short chain carboxylic acids, short chain peroxycarboxylic acids, or mixtures thereof; unless such an ingredient is specifically listed after the phrase.

As used herein, a composition or combination "substantially free of" one or more ingredients refers to a composition that includes none of that ingredient or that includes only trace or incidental amounts of that ingredient. Trace or incidental amounts can include the amount of the ingredient found in another ingredient as an impurity or that is generated in a minor side reaction during formation or degradation of the medium chain peroxycarboxylic acid.

As used herein, the phrase "a level insufficient to solubilize" refers to a concentration of an ingredient at which the ingredient is not sufficient to solubilize an insoluble material and to keep the composition substantially in one phase.

As used herein, the phrases "objectionable odor", "offensive odor", or "malodor" refer to a sharp, pungent, or acrid odor or atmospheric environment from which a typical person withdraws if they are able to. Hedonic tone provides a measure of the degree to which an odor is pleasant or unpleasant. An "objectionable odor", "offensive odor", or "malodor" has an hedonic tone rating it as unpleasant as or more unpleasant than a solution of 5 wt-% acetic acid, propionic acid, butyric acid, or mixtures thereof.

As used herein, the term "microorganism" refers to any noncellular or unicellular (including colonial) organism. Microorganisms include all prokaryotes. Microorganisms include bacteria (including cyanobacteria), lichens, fungi, protozoa, virinos, viroids, viruses, phages, and some algae. As used herein, the term "microbe" is synonymous with microorganism.

As used herein the term "poultry" refers to all forms of any bird kept, harvested, or domesticated for meat or eggs, and including chicken, turkey, ostrich, game hen, squab, guinea fowl, pheasant, quail, duck, goose, emu, or the like and the eggs of these birds. Poultry includes whole, sectioned, processed, cooked or raw poultry, and encompasses all forms of poultry flesh, by-products, and side products. The flesh of poultry includes muscle, fat, organs, skin, bones and body fluids and like components that form the animal. Forms of animal flesh include, for example, the whole or part of animal flesh, alone or in combination with other ingredients. Typical forms include, for example, processed poultry meat, such as cured poultry meat, sectioned and formed products, minced products, finely chopped products and whole products.

As used herein, the phrase "poultry processing surface" refers to a surface of a tool, a machine, equipment, a structure, a building, or the like that is employed as part of a poultry processing, preparation, or storage activity. Examples of poultry processing surfaces include surfaces of poultry processing or preparation equipment, of poultry processing wares or utensils, and of floors, walls, or fixtures of structures in which poultry processing occurs. Poultry processing utensils or tools include stunning apparatus, knife, sharpening steel, sharpening stone, scabbard and belt for holding knives, meat saw, cleaver, conveyor, bucket, working platform, scalding barrel or tank, pot, barrel or system for boiling water, scrapers, scraping table or platform, thermometer, hook, bleeding hooks, blood-catching trough, wash trough, hand wash-basin, rack, table, tank, cutting table, tote, bin, wrapping table, paper or plastic foil/bags for poultry wrapping, tool holder, metal mask, safety glove, boning apron, safety apron, and the like.

As used herein, the phrase "poultry processing machinery" refers to equipment used from first processing or slaughter through chilling and includes conveyor, shackle, killing machine, blood tunnel, scalder, picking machine, post-picking rinse cabinet, feet "hock" cutter, head cutter, neck breaker/oil (preen) gland remover, vent cutter, opening machine, evisceration machine, pack puller, crop remover, lung remover, carcass washer, inside-out washer, antimicrobial rinse cabinet, chiller; and also refers to equipment used for second processing or processing parts (e.g., deboning, and portion control) and including carcass splitter, deboner, cutters, and packaging.

As used herein, the phrase "poultry debris" refers to any debris, residue, material, dirt, offal, poultry part, poultry waste, poultry viscera, poultry organ, fragments or combinations of such materials, and the like removed from a poultry carcass or portion during processing and that enters a waste stream.

As used herein, the terms "mixed" or "mixture" when used relating to "peroxycarboxylic acid composition" or "peroxycarboxylic acids" refer to a composition or mixture including more than one peroxycarboxylic acid, such as a composition or mixture including peroxyacetic acid and peroxyoctanoic acid.

Differentiation of antimicrobial "-cidal" or "-static" activity, the definitions which describe the degree of efficacy, and the official laboratory protocols for measuring this efficacy are considerations for understanding the relevance of antimicrobial agents and compositions. Antimicrobial compositions can effect two kinds of microbial cell damage. The first is a lethal, irreversible action resulting in complete microbial cell destruction or incapacitation. The second type of cell damage is reversible, such that if the organism is rendered free of the agent, it can again multiply. The former is termed microbiocidal and the later, microbistatic. A sanitizer and a disinfectant are, by definition, agents which provide antimicrobial or microbiocidal activity. In contrast, a preservative is generally described as an inhibitor or microbistatic composition.

For the purpose of this patent application, successful microbial reduction is achieved when the microbial populations are reduced by at least 50%, or by significantly more than is achieved by a wash with water. Larger reductions in microbial population provide greater levels of protection for processed poultry product.

As used herein, a composition or combination "consisting essentially" of certain ingredients refers to a composition including those ingredients and lacking any ingredient that materially affects the basic and novel characteristics of the composition or method. The phrase "consisting essentially of" excludes from the claimed compositions and methods: a coupling agent; an ingredient that cannot be employed in food products or in food wash, handling, or processing according to U.S. government rules or regulations; and/or a peroxycarboxylic acid or carboxylic acid with 10 or more carbon atoms; unless such an ingredient is specifically listed after the phrase.

### Poultry Processing Employing Medium Chain Peroxycarboxylic Acid Compositions

The concentrate compositions of the present invention can be employed for a variety of antimicrobial purposes, for example as or for forming water-based systems for processing and/or washing poultry. The present compositions and methods can be employed for processing poultry and/or poultry meat at any step from gathering the live birds through packaging the final product. For example, the present compositions and methods can employed for washing, rinsing, chilling, or scalding poultry carcasses, poultry carcass parts, or poultry organs for reducing contamination of these items with spoilage/decay-causing microorganisms, and pathogenic microorganisms.

Before processing, live poultry are generally transported to and gathered at the beginning of a processing line. Poultry can be washed before entering the processing line. Processing typically begins with sacrificing the bird, for example, by electrical stunning, followed by neck cutting and bleeding. A first washing step, known as scalding (e.g. submersion or immersion scalding) can follow bleeding and loosens attachment of feathers to poultry skin. Submersion scalding can be accomplished according to the methods and employing compositions of the present invention. Submersion scalding can include immersing a stunned and bled bird into a scalding hot bath of water or a liquid antimicrobial composition, for example, at a temperature of 50 to 80 °C or 50 to 60 °C. The liquid antimicrobial composition in the bath can be agitated, sonicated, or pumped to increase contact of the composition with the carcass. Scalding can be conducted in a scald tank or trough, which contains the scalding liquid with sufficient liquid depth to completely submerse the poultry carcass. The carcass can be transported through the tank or trough by conveyor at a speed that provides a few minutes in the scalding liquid.

The scalding bath can include a medium chain peroxycarboxylic acid antimicrobial composition, for example, a composition of the present invention The scalding hot bath can contain a medium chain peroxycarboxylic acid antimicrobial composition with 2 to 50 ppm, 10 to 200 ppm, or 10 to 20 ppm of peroxycarboxylic, and amounts and additional ingredients as described herein. The scalding bath can also include one or more of the additional ingredients permitted in scalding baths.

After submersion scalding, the poultry can be picked, rinsed, and, optionally, singed before the next washing process. This second washing process is generally known as "dress" rinsing, "New York dress" rinsing, or post-pick rinsing, which rinses residual feathers and follicle residues from the carcass. Dress rinsing can include spraying a picked carcass with water, for example, at a temperature of 5 to 30 °C. To increase contact with the carcass, the antimicrobial compositions in the spray water can be applied at higher pressures, flow rates, temperatures, or with agitation or ultrasonic energy. Dress rinsing can be accomplished with a washing apparatus such as a wash or spray cabinet with stationary or moving spray nozzles. Alternatively, a "flood"-rinsing or liquid submersion washing apparatus may be used immediately after picking.

Picker rinsing or dress rinsing can be accomplished employing a medium chain peroxycarboxylic acid antimicrobial composition, for example a composition of the present invention. For example, the dress rinsing can employ a medium chain peroxycarboxylic acid antimicrobial composition with 2 to 500, 10 to 200, 50 to 300 ppm, or 100 to 200 ppm of peroxycarboxylic acid, and additional ingredients as described herein.

Dress rinsing can be a final washing step before dismembering the poultry. Dismembering can include removing the head, the feet, eviscerating, and removing the neck, in any order commonly employed in poultry processing. Washing can also occur during dismembering. The dismembered and eviscerated poultry can then be subjected to a washing step known as inside-outside bird washing (IOBW). Inside-outside bird washing washes the interior (body cavity) and exterior of the bird. Inside-outside bird washing can include rinsing the interior and exterior surfaces of the carcass with streams or floods of water, for example, at a temperature of 5 to 30 °C. To increase contact with the carcass, the antimicrobial compositions in the spray water can be applied at higher pressures, flow rates, temperatures, or with agitation or ultrasonic energy. Inside-outside bird washing can be accomplished by an apparatus that floods the bird carcass with streams of water in the inner cavity and over the exterior of the carcass. Such an apparatus can include a series of fixed spray nozzles to apply antimicrobial composition to the exterior of the bird and a rinse probe or bayonet that enters and applies antimicrobial composition to the body cavity.

Inside-outside bird washing can be accomplished employing a medium chain peroxycarboxylic acid antimicrobial composition, for example, a composition of the present invention. For example, inside-outside bird washing can employ a medium chain peroxycarboxylic acid antimicrobial composition with 2 to 500, 10 to 200, 20 to 200 ppm, or 50 to 100 ppm of peroxycarboxylic acid, and additional ingredients as described herein.

After inside-outside bird washing, both the interior and the exterior of the bird can be subjected to further decontamination. This further decontamination can be accomplished in part by a step commonly known as antimicrobial spray rinsing, sanitizing rinsing, or finishing rinsing. Such rinsing can include spraying the interior and exterior surfaces of the carcass with water, for example, at a temperature of 5 to 30 °C. To increase contact with the carcass, the antimicrobial compositions in the spray water can be applied using fixed or articulating nozzles, at higher pressures, flow rates, temperatures, with agitation or ultrasonic energy, or with rotary brushes. Spray rinsing can be accomplished by an apparatus such as a spray cabinet with stationary or moving spray nozzles. The nozzles create a mist, vapor, or spray that contacts the carcass surfaces.

Antimicrobial spray rinsing, sanitizing rinsing, or finishing rinsing can be accomplished employing a medium chain peroxycarboxylic acid antimicrobial composition, for example, a composition of the present invention. For example, spray rinsing can employ a medium chain peroxycarboxylic acid antimicrobial composition with 2 to 500, 10 to 200, 50 to 300 ppm, or 100 to 200 ppm of peroxycarboxylic acid, and additional ingredients as described herein.

After spray rinsing, the bird can be made ready for packaging or for further processing by chilling, specifically submersion chilling or air chilling. Submersion chilling both washes and cools the bird to retain quality of the meat. Submersion chilling can include submersing the carcass completely in water or slush, for example, at a temperature of less than 5 °C, until the temperature of the carcass approaches that of the water or slush. Chilling of the carcass can be accomplished by submersion in a single bath, or in two or more stages, each of a lower temperature. Water can be applied with agitation or ultrasonic energy to increase contact with the carcass. Submersion chilling can be accomplished by an apparatus such as a tank containing the chilling liquid with sufficient liquid depth to completely submerse the poultry carcass. The carcass can be conveyed through the chiller by various mechanisms, such as an auger feed or a drag bottom conveyor. Submersion chilling can also be accomplished by tumbling the carcass in a chilled water cascade.

Submersion chilling can be accomplished employing a medium chain peroxycarboxylic acid antimicrobial composition, for example, a composition of the present invention. For example, submersion chilling can employ a medium chain peroxycarboxylic acid antimicrobial composition with 2 to 500, 10 to 200, 2 to 100 ppm, or 2 to 30 ppm of peroxycarboxylic acid, and additional ingredients as described herein.

Like submersion chilling, air chilling or cryogenic chilling cools the bird to retain quality of the meat. Air cooling can be less effective for decontaminating the bird, as the air typically would not dissolve, suspend, or wash away contaminants. Air chilling with a gas including an antimicrobial agent can, however, reduce the burden of microbial, and other, contaminants on the bird. Air chilling can include enclosing the carcass in a chamber having a temperature below 5 °C until the carcass is chilled. Air chilling can be accomplished by applying a cryogenic fluid or gas as a blanket or spray.

Air chilling can be accomplished employing a medium chain peroxycarboxylic acid antimicrobial composition, e.g., a composition of the present invention. For example, air chilling compositions can include a gaseous or densified fluid medium chain peroxycarboxylic acid antimicrobial composition.

After chilling, the bird can be subjected to additional processing steps including post-chill submersion, post-chill spray, weighing, quality grading, allocation, portioning, deboning, and the like. This further processing can also include methods or compositions according to the present invention for washing with medium chain peroxycarboxylic acid compositions. For example, it can be advantageous to wash poultry portions, such as legs, breast quarters, wings, and the like, formed by portioning the bird. Such portioning forms or reveals new meat, skin, or bone surfaces which may be subject to contamination and benefit from treatment with medium chain peroxycarboxylic acid antimicrobial composition. Similarly, deboning a poultry carcass or a portion of a poultry carcass can expose additional areas of the meat or bone to microbial contamination. Washing the deboned poultry carcass or portion with a medium chain peroxycarboxylic acid composition can advantageously reduce any such contamination. In addition, during any further processing, the deboned meat can also come into contact with microbes, for example, on contaminated surfaces. Washing the deboned meat with a medium chain peroxycarboxylic acid composition can reduce such contamination. Washing can be accomplished by spraying, immersing, tumbling, or a combination thereof, or by applying a gaseous or densified fluid antimicrobial composition.

Usable side products of poultry include heart, liver, and gizzard (e.g. giblets), neck, feet, and the like. These are typically harvested later in processing, and are sold as food products. Of course, microbial contamination of such food products is undesirable. Thus, these side products can also be washed with a medium chain peroxycarboxylic acid composition in methods of the present invention. Typically, these side products will be washed after harvesting from the poultry carcass and before packaging. They can be washed by submersion or spraying, or transported in a flume including the antimicrobial composition. They can be contacted with an antimicrobial composition according to the invention in a giblet chiller or ice chiller.

The poultry, poultry product, poultry portion, poultry side product, or the like can be packaged before sending it to more processing, to another processor, into commerce, or to the consumer. Any such poultry can be washed with a water based medium chain peroxycarboxylic acid antimicrobial composition, which can then be removed (e.g., drained, blown, or blotted) from the poultry. In certain circumstances wetting the poultry before packaging is disadvantageous. In such circumstances, a gaseous or densified fluid form of the peroxycarboxylic acid antimicrobial composition can be employed for reducing the microbial burden on the poultry. Such a gaseous composition can be employed in a variety of processes known for exposing poultry to a gas before or during packaging, such as modified atmosphere packaging.

The advantageous stability of medium chain peroxycarboxylic acid compositions in such methods, which include the presence of poultry debris or residue, makes these compositions competitive with cheaper, less stable, and potentially toxic chlorinated compounds. The poultry product can be contacted with the compositions of the invention effective to result in a reduction significantly greater than is achieved by washing with water, or at least a 50% reduction, at least a 90% reduction, or at least a 99% reduction in the resident microbial preparation.

### Spraying Poultry

The present method for washing poultry may employ a pressure spray of the medium chain peroxycarboxylic acid composition. During application of the spray solution on the poultry product, the surface of the poultry product can be moved with mechanical action, e.g., agitated, rubbed, brushed, etc. Agitation can be by physical scrubbing of the poultry product, through the action of the spray solution under pressure, through sonication, or by other methods. Agitation increases the efficacy of the spray solution in killing micro-organisms, perhaps due to better exposure of the solution into the crevasses or small colonies containing the micro-organisms. The spray solution, before application, can also be heated to a temperature of 15 to 20 °C or 20 to 60 °C to increase efficacy.

Application of the material by spray can be accomplished using a manual spray wand application, an automatic spray of poultry product moving along a production line using multiple spray heads to ensure complete contact, or other spray apparatus. One automatic spray application involves the use of a spray booth. The spray booth substantially confines the sprayed composition to within the parameter of the booth. The production line moves the poultry product through the entryway into the spray booth in which the poultry product is sprayed on all its exterior surfaces with sprays within the booth. After a complete coverage of the material and drainage of the material from the poultry product within the booth, the poultry product can then exit the booth in a fully treated form. The spray booth can include steam jets that can be used to apply the antimicrobial compositions of the invention. These steam jets can be used in combination with cooling water to ensure that the treatment reaching the poultry product surface is less than 65°C, or less than 60°C. The temperature of the spray on the poultry product can ensure that the poultry product is not substantially altered (cooked) by the temperature of the spray. The spray pattern can be virtually any useful spray pattern.

### Immersing Poultry

During processing of the poultry product, the poultry product can be immersed into a tank containing a quantity of washing solution. The washing solution can be agitated to increase the efficacy of the solution and the speed in which the solution reduces micro-organisms accompanying to the poultry product. Agitation can be obtained by conventional methods, including ultrasonics, aeration by bubbling air through the solution, by mechanical methods, such as strainers, paddles, brushes, pump driven liquid jets, or by combinations of these methods. The washing solution can be heated to increase the efficacy of the solution in killing micro-organisms. The poultry product can be immersed in the washing solution after the poultry product has been eviscerated and before any cooling process such as a chiller tank or a chill water spray. The poultry product can be immersed in the washing composition post-chill.

### Foam Treating Poultry

The poultry product can be treated with a foaming version of the composition. The foam can be prepared by mixing foaming surfactants with the washing solution at time of use. The foaming surfactants can be nonionic, anionic or cationic in nature. Examples of useful surfactant types include, but are not limited to the following: alcohol ethoxylates, alcohol ethoxylate carboxylate, amine oxides, alkyl sulfates, alkyl ether sulfate, sulfonates, quaternary ammonium compounds, alkyl sarcosines, betaines and alkyl amides. The foaming surfactant can be mixed at time of use with the washing solution. Use solution levels of the foaming agents is from 50 ppm to 2.0 wt-%. At time of use, compressed air can be injected into the mixture, then applied to the poultry product surface through a foam application device such as a tank foamer or an aspirated wall mounted foamer.

### Gel Treating Poultry

The poultry product can be treated with a thickened or gelled version of the composition. In the thickened or gelled state the washing solution remains in contact with the poultry product surface for longer periods of time, thus increasing the antimicrobial efficacy. The thickened or gelled solution will also adhere to vertical surfaces. The composition or the washing solution can be thickened or gelled using existing technologies such as: xanthan gum, polymeric thickeners, cellulose thickeners or the like. Rod micelle forming systems such as amine oxides and anionic counter ions could also be used. The thickeners or gel forming agents can be used either in the concentrated product or mixing with the washing solution, at time of use. Typical use levels of thickeners or gel agents range from 100 ppm to 10 wt-%.

### Light Treating Poultry

In another alternative embodiment of the present invention, the poultry product can be exposed to an activating light (or other electromagnetic radiation) source following application of the washing solution. The activating light (or other electromagnetic radiation) can improve the antimicrobial efficacy of the washing solution. The light can be ultraviolet light, infrared light, visible light, or a combination thereof. Other forms of electromagnetic radiation include radar and microwave.

### Processing Poultry Wash Water

Washing poultry can employ a large volume of water, or another carrier. Poultry wash water can be used more than once (recycled), provided the water can be treated so that it does not transfer undesirable microbes to the poultry being washed with the recycled wash water. One way to prevent the transfer of such undesirable microbes, is to reduce the microbial burden of the recycled wash water by adding a mixture of peroxycarboxylic acids. For example, if the fluid to be recycled is water-based and lacking any peroxycarboxylic acid, a medium chain peroxycarboxylic acid concentrate composition can be added to result in an effective antimicrobial concentration of peroxycarboxylic acid in the fluid to be recycled. Alternatively, if the fluid to be recycled already includes or has included a peroxycarboxylic acid, a medium chain peroxycarboxylic acid concentrate composition can be added to increase any concentration of peroxycarboxylic acid to an effective antimicrobial level. It may be that the peroxycarboxylic acid in the solution to be recycled has been totally depleted, in which case more of the medium chain peroxycarboxylic acid composition is added.

In some circumstances, the water to be recycled includes a substantial burden of organic matter or microbes. If this is the case, the water may be unsuitable for recycling. However, if the water is to be recycled, the operator adds a sufficient quantity of the medium chain peroxycarboxylic acid composition to provide an effective antimicrobial amount of the peroxycarboxylic acid after a certain amount is consumed by the organic burden or microbes already present. Then, the recycled fluid can be used with antimicrobial effect. Routine testing can be employed for determining levels of peroxycarboxylic acid, or of organic burden.

In each case, the method of recycling the poultry wash water includes recovering the poultry wash water, adding a composition including medium chain peroxycarboxylic acids, and reusing the poultry wash water for washing poultry, for example, as described above. The poultry wash water can be recovered from steps in poultry processing including submersion scalding, dress rinsing, inside-outside bird washing, spray rinsing, and submersion chilling. Methods of recovering wash water from these steps are well-known to those skilled in the poultry washing and/or processing arts. The wash water can also be strained, filtered, diluted, or otherwise cleaned and processed during recycling.

Water (e.g., medium chain peroxycarboxylic acid composition) that has been used to wash poultry can be recovered and recycled to wash poultry or the apparatus or plant used to transport or process poultry. The water can be treated so that it does not transfer undesirable microbes to the poultry, apparatus, or plant being washed with the recycled wash water. Not transferring undesirable microbes be accomplished by employing a recycled composition that is free of pathogenic microorganisms, that is free of fecal coliform organisms, or free of both. Not transferring undesirable microbes can include reducing contamination (e.g., physical, chemical, or microbiological contamination) of the recycled composition to prevent adulteration of product. Not transferring undesirable microbes can include reducing contamination (e.g., physical, chemical, or microbiological contamination) of the recycled composition to prevent contamination or adulteration of product. The water can be treated by adding medium chain peroxycarboxylic acid concentrate composition, by filtering or straining the water, and/or by light treating the water. The method of recycling the poultry wash water then includes reusing the poultry wash water for washing poultry, for example, as described above.

The method of recycling poultry wash water (e.g., medium chain peroxycarboxylic acid composition) includes employing wash water recovered from one or more wash procedures at an earlier wash procedure in poultry processing. For example, the present method can include recovering poultry wash water from submersion chilling; treating the water; and employing the treated wash water in at least one of submersion scalding, dress rinsing, inside-outside bird washing, and spray rinsing. For example, the present method can include recovering poultry wash water from spray rinsing; treating the water; and employing the treated wash water in at least one of submersion scalding, dress rinsing, and inside-outside bird washing. For example, the present method can include recovering poultry wash water from inside-outside bird washing; treating the water; and employing the treated wash water in at least one of submersion scalding and dress rinsing. For example, the present method can include recovering poultry wash water from dress rinsing; treating the water; and employing the treated wash water in submersion scalding.

The method of recycling poultry wash water (e.g., medium chain peroxycarboxylic acid composition) includes employing wash water recovered from one or more wash procedures for washing apparatus in the poultry processing plant or parts of the plant itself (e.g., floors, walls, exterior pavement, or the like). For example, the present method can include recovering poultry wash water from at least one of submersion scalding, dress rinsing, inside-outside bird washing, spray rinsing, and submersion chilling; treating the water; and employing the treated water for washing processing apparatus. For example, the present method can include recovering poultry wash water from at least one of submersion scalding, dress rinsing, inside-outside bird washing, spray rinsing, and submersion chilling; treating the water; and employing the treated water for washing a portion of the processing plant, such as a floor, a wall, or exterior pavement. For example, the present method can include recovering poultry wash water from at least one of submersion scalding, dress rinsing, inside-outside bird washing, spray rinsing, and submersion chilling; treating the water; and employing the treated water for washing trucks or cages, for example, those in which poultry was transported to the plant. For example, the present method can include recovering poultry wash water from at least one of submersion scalding, dress rinsing, inside-outside bird washing, spray rinsing, and submersion chilling; treating the water; and employing the treated water for washing poultry entering the plant.

### Test Methods for Reducing Microbial Populations on Poultry

Spray application of an antimicrobial composition of the invention can be tested and shown to significantly reduce bacterial pathogen contamination on poultry carcass samples. Carcass samples can be contaminated with, for example, *Salmonella typhimurium* ATCC 13311, *Escherichia coli* serotype 0157:H7 ATCC 43895, or *Listeria monocytogenes* (Petite Scott A) ATCC 49594. Identities of these bacteria can be confirmed based on gram stain reactions, microscopic morphology and growth characteristics using the appropriate selective medium. These strains can be grown in culture, by conventional techniques, and adjusted to yield, for example, ≥10⁷ colony forming units per milliliter (CFU/mL).

Carcass samples can be prepared by inoculating the exterior of a thawed piece of chicken skin with a suitable volume of a pathogen culture. The square of skin can be depressed to form a bowl, and the culture can be allowed to sit in this bowl for, for example, 5 min to allow attachment of the bacteria. After attachment, culture can be removed from the skin sample and each sample can be placed on a metal stand, epidermal side/inoculated side up.

The skin sample can be then sprayed with an antimicrobial composition. For use, the composition can be diluted to, for example, 200±10 ppm total medium chain peroxycarboxylic acid. The poultry carcass sample can be sprayed with the composition for, for example, 15 seconds at 4.14 bar (60 psi) and room temperature.

After spraying, the skin samples can be aseptically removed and placed into solution including an agent that inactivates the peroxycarboxylic acids without killing bacteria. The remaining bacteria can be suspended by vortexing and serial dilutions of this solution can be plated for growth of the bacteria. Dilutions can be prepared using phosphate buffered dilution water (PBDW). *S. typhimurium* and *L. monocytogenes* plates can be incubated at 37 °C for 48 hours. *E. coli* 0157:H7 plates can be incubated at 37 °C for 24 hours. For each sample, the number of colony forming units per skin square can be calculated.

Analysis of the numbers of bacteria on skin samples can demonstrate that spray application of the antimicrobial composition of the invention significantly reduces levels of, for example, *Salmonella typhimurium*, *Escherichia coli*, and *Wisteria monocytogenes.*

Submersion application of an antimicrobial composition of the invention can be tested and shows significant reduction of bacterial pathogen contamination on poultry carcass samples.

Bacteria can be selected and cultured generally as described above, except that the bacteria can be diluted to, for example, ≥10⁶ colony forming units per milliliter (CFU/mL) for inoculation of carcass samples.

Carcass samples can be prepared by thawing frozen chicken wings and livers. The thawed samples can be inoculated by submersing in the suspension of bacteria. Other surfaces can be not inoculated. The inoculated surface can be marked for identification and allowed to drain and sit for 5 min at room temperature.

The antimicrobial composition can be as described above. The use solution can be diluted to, for example, 30 ppm total medium chain peroxycarboxylic acid. Antimicrobial agent can be applied by submersing the inoculated and uninoculated surfaces, for example, for 60 min in the same 2 liters of a use solution of the antimicrobial agent at 4 °C. The same experiment can be performed using water without the antimicrobial agent.

After submersing, the inoculated and uninoculated surfaces can be removed from the antimicrobial agent use solution or water and gently agitated solution including an agent that inactivates the peroxycarboxylic acids without killing bacteria. Removing and analyzing the uninoculated surfaces can be necessary to measure cross contamination of bacteria from the inoculated surfaces. Serial dilutions of this solution can be plated for growth of the bacteria as described above in Example 2. Cross contamination log reduction can be calculated by subtracting the Log number of bacteria on uninoculated surfaces submersed in the antimicrobial use solution from the Log number of surviving bacteria on uninoculated surfaces submersed in water.

Analysis of the numbers of bacteria on carcass samples can demonstrate that submersion application of the antimicrobial composition of the invention significantly reduces levels of, for example, *Salmonella typhimurium*, *Escherichia coli*, and *Wisteria monocytogenes.*

Medium chain peroxycarboxylic acid antimicrobial composition in water can be used for spraying or submersing eviscerated chicken carcasses and can provide a reduction of, for example, total aerobic bacteria, coliform bacteria, and *Escherichia coli.*

Freshly collected chicken carcasses can be subjected to spraying with or submersion in an antimicrobial composition described above. Use solutions, spray time and pressure, and submersion temperature and duration can be as described above. Some carcasses can be both sprayed and submersed. Control carcasses can be untreated.

Each carcass can be then placed in a collection bag using freshly gloved hands. In the bag, the carcass can be rinsed with Butterfield's Phosphate Diluent (BPD) and the BPD solution collected for microbiology testing. Known, standard procedures for quantifying, for example, total aerobic bacteria, coliform bacteria, and *Escherichia coli* can be employed.

Analysis of the numbers of bacteria on carcass samples can demonstrate that spray, submersion, and combination application of the antimicrobial composition of the invention significantly reduces levels of, for example, total aerobic bacteria, coliform bacteria, and *Escherichia coli.*

### Medium Chain Peroxycarboxylic Acid Antimicrobial Compositions

The present invention includes medium chain peroxycarboxylic acid compositions. The present medium chain peroxycarboxylic acid compositions can include increased levels of medium chain peroxycarboxylic acid compared to conventional peroxycarboxylic acid compositions. The inventive compositions include medium chain peroxycarboxylic acid and a solubilizer. The solubilizer can increase or maintain the solubility of the medium chain peroxycarboxylic acid. The present medium chain peroxycarboxylic acid compositions can include a microemulsion or a surfactant that can form a microemulsion. The present medium chain peroxycarboxylic acid compositions need not include substantial amounts of short chain carboxylic acid, short chain peroxycarboxylic acid, or mixture thereof. It is believed that, in conventional mixed peroxycarboxylic acid compositions, the short chain carboxylic acid, short chain peroxycarboxylic acid, or mixture thereof can solubilize medium chain peroxycarboxylic acid.

The present compositions include medium chain peroxycarboxylic acid. These compositions can also include medium chain carboxylic acid. Such compositions can include advantageously high levels of medium chain peroxycarboxylic acid.

The present composition includes one or more (e.g., at least one) of oxidizing agent, acidulant, stabilizing agent, mixtures thereof, or the like. The present composition can include any of a variety of oxidizing agents, for example, hydrogen peroxide. The oxidizing agent can be effective to convert a medium chain carboxylic acid to a medium chain peroxycarboxylic acid. The oxidizing agent can also have antimicrobial activity, although it may not be present at a concentration sufficient to exhibit such activity. The present composition can include any of a variety of acidulants, for example, an inorganic acid. The acidulant can be effective to bring the pH of the present concentrate composition to less than 1, or to bring the pH of the present use composition to 5 or below, 4 or below, or 3 or below. The acidulant can augment the antimicrobial activity of the present composition. The present composition can include any of a variety of stabilizing agents, for example, sequestrant, for example, phosphonate sequestrant. The sequestrant can be effective to stabilize the peroxycarboxylic acid.

The present composition may exhibit advantageous stability of the peroxycarboxylic acid. It is believed that in approximately one year at ambient conditions or room temperature (or 1 week at 60 °C) the amount of peroxycarboxylic acid in the compositions can be 80% or more, 85 % or more, 90% or more, or 95% or more of the initial values or use composition levels. Such aged compositions are included in the scope of the present invention.

The present composition may exhibit advantageous efficacy compared to other antimicrobial compositions at the same level of active. The present composition may have reduced or no volatile organic compounds compared to conventional peroxycarboxylic acid compositions. The present composition may have a higher flash point compared to conventional peroxycarboxylic acid compositions. The present composition may exhibit improved operator or user safety compared to conventional peroxycarboxylic acid compositions. The present composition may exhibit improved storage or transportation safety compared to conventional peroxycarboxylic acid compositions.

The present composition includes 0.5 to 5 wt-% medium chain peroxycarboxylic acid.

The present composition 5 to 76.5 wt-% carrier.

The present composition includes 5 to 10 wt-% oxidizing agent

The present composition includes 15 to 35 wt-% acidulant.

The present composition includes 1 to 5 wt-% stabilizing agent.

### Compositions of Medium Chain Carboxylic Acids and/or Peroxycarboxylic Acids

Peroxycarboxylic (or percarboxylic) acids generally have the formula R(CO₃H)ₙ, where, for example, R is an alkyl, arylalkyl, cycloalkyl, aromatic, or heterocyclic group, and n is one, two, or three, and named by prefixing the parent acid with peroxy. The R group can be saturated or unsaturated as well as substituted or unsubstituted. The composition and methods of the invention can employ medium chain peroxycarboxylic acids containing, for example, 6 to 12 carbon atoms. For example, medium chain peroxycarboxylic (or percarboxylic) acids can have the formula R(CO₃H)ₙ, where R is a C₅-C₁₁ alkyl group, a C₅-C₁₁ cycloalkyl, a C₅-C₁₁ arylalkyl group, C₅-C₁₁ aryl group, or a C₅-C₁₁ heterocyclic group; and n is one, two, or three.

Peroxycarboxylic acids can be made by the direct action of an oxidizing agent on a carboxylic acid, by autoxidation of aldehydes, or from acid chlorides, and hydrides, or carboxylic anhydrides with hydrogen or sodium peroxide. The medium chain percarboxylic acids can be made by the direct, acid catalyzed equilibrium action of hydrogen peroxide on the medium chain carboxylic acid. Scheme 1 illustrates an equilibrium between carboxylic acid and oxidizing agent (Ox) on one side and peroxycarboxylic acid and reduced oxidizing agent (Ox_{red}) on the other:

RCOOH + Ox □ RCOOOH + Ox_{red} (1)

Scheme 2 illustrates an embodiment of the equilibrium of scheme 1 in which the oxidizing agent is hydrogen peroxide on one side and peroxycarboxylic acid and water on the other:

RCOOH + H₂O₂ □ RCOOOH + H₂O (2)

In conventional mixed peroxycarboxylic acid compositions it is believed that the equilibrium constant for the reaction illustrated in scheme 2 is 2.5, which may reflect the equilibrium for acetic acid. Although not limiting to the present invention, it is believed that the present compositions have an equilibrium constant of 4.

Peroxycarboxylic acids useful in the compositions and methods of the present invention include peroxyoctanoic acid. Peroxyoctanoic (or peroctanoic) acid is a peroxycarboxylic acid having the formula, for example, of n-peroxyoctanoic acid: CH₃(CH₂)₆COOOH. Peroxyoctanoic acid can be an acid with a straight chain alkyl moiety, an acid with a branched alkyl moiety, or a mixture thereof. Peroxyoctanoic acid is surface active and can assist in wetting hydrophobic surfaces, such as those of microbes.

The composition of the present invention includes a carboxylic acid. Generally, carboxylic acids have the formula R-COOH wherein the R can represent any number of different groups including aliphatic groups, alicyclic groups, aromatic groups, heterocyclic groups, all of which can be saturated or unsaturated as well as substituted or unsubstituted. Carboxylic acids can have one, two, three, or more carboxyl groups.

Suitable medium chain carboxylic acids include octanoicacid.

The present compositions and methods include a medium chain peroxycarboxylic acidThe medium chain peroxyoctanoic acid includes or is peroxyoctanoic acid.

The present composition includes 0.5 to 5 wt-% medium chain peroxycarboxylic acid.

The present compositions and methods include a medium chain carboxylic acid. The medium chain carboxylic acid includes or is octanoic acid.

The present composition 1 to 10 wt-% medium chain carboxylic acid.

The compositions and methods include a medium chain peroxycarboxylic acid and the corresponding medium chain carboxylic acid.

The present composition may include an amount of medium chain peroxycarboxylic acid effective for killing one or more (e.g., at least one) of the food-borne pathogenic bacteria associated with a food product, such as *Salmonella typhimurium*, *Salmonella javiana*, *Campylobacterjejuni*, *Listeria monocytogenes*, and *Escherichia coli* O157:H7, yeast, mold, and the like. The present composition may include an amount of medium chain peroxycarboxylic acid effective for killing one or more (e.g., at least one) of the pathogenic bacteria associated with a health care surfaces and environments, such as *Salmonella typhimurium*, *Staphylococcus aureus*, *Salmonella choleraesurus*, *Pseudomonas aeruginosa*, *Escherichia coli*, mycobacteria, yeast, mold, and the like. The compositions and methods of the present invention have activity against a wide variety of microorganisms such as Gram positive (for example, *Listeria monocytogenes* or *Staphylococcus aureus*) and Gram negative (for example, *Escherichia coli* or *Pseudomonas aeruginosa*) bacteria, yeast, molds, bacterial spores, viruses, etc. The compositions and methods of the present invention, as described above, have activity against a wide variety of human pathogens. The present compositions and methods can kill a wide variety of microorganisms on a food processing surface, on the surface of a food product, in water used for washing or processing of food product, on a health care surface, or in a health care environment.

### Solubilizers

The present compositions include a solubilizer. The present invention relates to solubilizers for medium chain carboxylic acids and medium chain peroxycarboxylic acids. The solubilizer can increase or maintain the solubility in the composition of the medium chain peroxycarboxylic acid or the medium chain carboxylic acid. The present compositions and methods include a surfactant. The surfactant can be employed as a solventThe surfactant forms a microemulsion. The composition including the present solubilizer may take the form of a viscoelastic gel or liquid.

The present composition includes 1 to 20 wt-% solubilizer.

### Surfactant Solubilizers and Compositions Including Them

The present compositions and methods include as solubilizer one or more (e.g., at least one) a microemulsion forming surfactants. Suitable microemulsion forming surfactants include anionic surfactant. A microemulsion forming surfactant forms a microemulsion in a composition including a medium chain peroxycarboxylic acid and a medium chain carboxylic acid. The present composition includes a microemulsion.

The present composition can be determined to be a microemulsion by testing the composition for being a shear thinning viscoelastic gel or liquid that has a blue tyndall appearance. Although not limiting to the present invention, blue tyndall appearance is believed to indicate a heterogeneous system of a small, suspended dispersion (e.g., a microemulsion), which is effective in scattering blue light.

The present composition can be determined to be a microemulsion by testing the ability to form a physically stable composition at different concentrations of surfactant solubilizer. A microemulsion can yield a curve with a maximum of physical stability at a concentration with unstable compositions at higher and lower concentrations. Typically, mixtures of solvents and surfactants (e.g., acetic acid and surfactant) do not form microemulsions.

The composition including surfactant solubilizer may take the form of a viscoelastic gel or liquid. Increasing the concentration of the medium chain carboxylic acid, medium chain peroxycarboxylic acid, or mixture thereof can increase the degree to which the composition is a viscoelastic gel or liquid. Increasing the concentration of the surfactant solubilizer can increase the degree to which the composition is a viscoelastic gel or liquid. The gel can be sufficiently viscoelastic to hold its molded shape. Alkyl benzene sulfonate surfactant (e.g., LAS) can be employed to form a viscoelastic gel or liquid that can hold its molded shapeThe alkyl benzene sulfonate surfactant containing viscoelastic gel can hold its shape even at 60 °C.

Although not limiting to the present invention, the present compositions may include medium chain peroxycarboxylic acid sequestered in the surfactant of the microemulsion. This can stabilize the peroxycarboxylic acid by keeping it away from impurities or reducing agents in the bulk water. This can increase the production of peroxycarboxylic acid by pulling it out of solution. Although not limiting to the present invention, it is believed that one explanation for the viscoelastic properties of gels of the present compositions is that they are due to repulsive forces between the dispersions/droplets that are stabilized by the microemulsion-forming surfactant. Surfactants that are charged may increase the electrostatic repulsion. Suitable charged surfactants include anionic surfactants.

The present composition may include anionic surfactant and another surfactant or surfactants. For example, the present compositions can include anionic surfactant and nonionic surfactant or semi-polar nonionic surfactant.

The present composition includes medium chain peroxycarboxylic acid; medium chain carboxylic acid; carrier; and one or more (e.g., at least one) microemulsion forming surfactants. The present composition includes 0.5 to 5 wt-% medium chain peroxycarboxylic acid; 1 to 10 wt-% medium chain carboxylic acid; 5 to 76.5 wt-% carrier; and 1 to 20 wt-% microemulsion forming surfactant. The present composition includes C8 peroxycarboxylic acid; C8 carboxylic acid; water; and one or more (e.g., at least one) microemulsion forming surfactants. The present composition includes 0.5 to 5 wt-% C8 peroxycarboxylic acid; 1 to 10 wt-% C8 carboxylic acid; 5 to 76.5 wt-% water; and 1 to 20 wt-% microemulsion forming surfactant.

### Anionic Surfactants

The present composition includes an anionic surfactant as solubilizer. Suitable anionic surfactants include organic sulfonate surfactant, organic sulfate surfactant, phosphate ester surfactant, carboxylate surfactant, mixtures thereof, or the like. The anionic surfactant may includes alkyl sulfonate, alkylaryl sulfonate, alkylated diphenyl oxide disulfonate, alkylated naphthalene sulfonate, alcohol alkoxylate carboxylate, sarcosinate, taurate, acyl amino acid, alkanoic ester, phosphate ester, sulfuric acid ester, salt or acid form thereof, or mixture thereof. The particular salts will be suitably selected depending upon the particular formulation and the needs therein.

Suitable anionic surfactants include sulfonic acids (and salts), such as isethionates (e.g. acyl isethionates), alkylaryl sulfonic acids and salts thereof, alkyl sulfonates, secondary alkane sulfonates, and the like.

Examples of suitable synthetic, water soluble anionic detergent compounds include the ammonium and substituted ammonium (such as mono-, di- and triethanolamine) and alkali metal (such as sodium, lithium and potassium) salts of the alkyl mononuclear aromatic sulfonates such as the alkyl benzene sulfonates containing from 5 to 18 carbon atoms in the alkyl group in a straight or branched chain, e.g., the salts of alkyl benzene sulfonates or of alkyl toluene, xylene, cumene and phenol sulfonates; alkyl naphthalene sulfonate, diamyl naphthalene sulfonate, and dinonyl naphthalene sulfonate and alkoxylated derivatives or their free acids. Suitable sulfonates include olefin sulfonates, such as long chain alkene sulfonates, long chain hydroxyalkane sulfonates or mixtures of alkenesulfonates and hydroxyalkane-sulfonates. Suitable sulfonates include secondary alkane sulfonates.

The present compositions including an anionic surfactant, such as a normal C8 sulfonate, can be non-foam or low foam compositions. Such compositions can be advantageous for applications such as clean in place, machine warewashing, destaining, and sanitizing, laundry washing, destaining, and sanitizing, etc.

For applications in which foaming is desirable, a foaming agent can be added as part of the present composition or separately. In a two-step offering, a foaming agent can be combined with a dilution of the non-foam or low foam composition to form a foaming use solution. In a one-step offering, the foaming agent can be incorporated into the concentrated composition. One suitable foaming agent is LAS acid. LAS acid can form a microemulsion in the present compositions. LAS acid can form a viscoelastic gel or liquid in the present compositions. Additional suitable foaming agents include secondary alkane sulfonate, alkylated diphenyl oxide disulfonate (e.g., C12 alkyl diphenyl oxide disulfonate), alkyl ether sulfate (e.g., with n=1-3) (e.g., sodium laureth sulfate (with n=1, 2, or 3)), sodium lauryl sulfate, or the like.

Such foaming agents provide a foaming composition with one or more desirable foaming characteristics. Desirable foaming characteristics include, for example, foam being visible for 5 min after forming the foam; foam with continuous and good drainage (e.g., when applied to a vertical surface); foam that dries to a clear appearance, e.g., that leaves no visible residue on a stainless steel surface; and/or foam that can be applied with a moderate or low odor compared to a conventional foam containing peroxyacetic acid.

Anionic sulfate surfactants suitable for use in the present compositions include alkyl ether sulfates, alkyl sulfates, the linear and branched primary and secondary alkyl sulfates, alkyl ethoxysulfates, fatty oleyl glycerol sulfates, alkyl phenol ethylene oxide ether sulfates, the C₅ -C₁₇ acyl-N-(C₁ -C₄ alkyl) and -N-(C₁ -C₂ hydroxyalkyl) glucamine sulfates, and sulfates of alkylpolysaccharides such as the sulfates of alkylpolyglucoside, and the like. Also included are the alkyl sulfates, alkyl poly(ethyleneoxy) ether sulfates and aromatic poly(ethyleneoxy) sulfates such as the sulfates or condensation products of ethylene oxide and nonyl phenol (usually having 1 to 6 oxyethylene groups per molecule).

Anionic carboxylate surfactants suitable for use in the present compositions include carboxylic acids (and salts), such as alkanoic acids (and alkanoates), ester carboxylic acids (e.g. alkyl succinates), ether carboxylic acids, and the like. Such carboxylates include alkyl ethoxy carboxylates, alkyl aryl ethoxy carboxylates, alkyl polyethoxy polycarboxylate surfactants and soaps (e.g. alkyl carboxyls). Secondary carboxylates useful in the present compositions include those which contain a carboxyl unit connected to a secondary carbon. The secondary carbon can be in a ring structure, e.g. as in p-octyl benzoic acid, or as in alkyl-substituted cyclohexyl carboxylates. The secondary carboxylate surfactants typically contain no ether linkages, no ester linkages and no hydroxyl groups. Further, they typically lack nitrogen atoms in the head-group (amphiphilic portion). Suitable secondary soap surfactants typically contain 11-13 total carbon atoms, although more carbons atoms (e.g., up to 16) can be present. Suitable carboxylates also include acylamino acids (and salts), such as acylgluamates, acyl peptides, sarcosinates (e.g. N-acyl sarcosinates), taurates (e.g. N-acyl taurates and fatty acid amides of methyl tauride), and the like.

Suitable anionic surfactants include alkyl or alkylaryl ethoxy carboxylates of Formula 3:

R - O - (CH₂CH₂O)ₙ(CH₂)ₘ - CO₂X (3)

in which R is a C₈ to C₂₂ alkyl group or 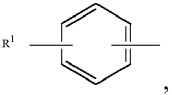 in which R¹ is a C₄-C₁₆ alkyl group; n is an integer of 1-20; m is an integer of 1-3; and X is a counter ion, such as hydrogen, sodium, potassium, lithium, ammonium, or an amine salt such as monoethanolamine, diethanolamine or triethanolamine. In an example, in Formula 3, n is an integer of 4 to 10 and m is 1. In an example, in Formula 3, R is a C₈-C₁₆ alkyl group. In an example, in Formula 3, R is a C₁₂-C₁₄ alkyl group, n is 4, and m is 1.

In an example, in Formula 3, R is 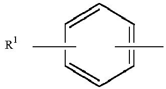 and R¹ is a C₆-C₁₂ alkyl group. In an example, in Formula 3, R¹ is a C₉ alkyl group, n is 10 and m is 1. Such alkyl and alkylaryl ethoxy carboxylates are commercially available. These ethoxy carboxylates are typically available as the acid forms, which can be readily converted to the anionic or salt form. Commercially available carboxylates include, Neodox 23-4, a C₁₂₋₁₃ alkyl polyethoxy (4) carboxylic acid (Shell Chemical), and Emcol CNP-110, a C₉ alkylaryl polyethoxy (10) carboxylic acid (Witco Chemical). Carboxylates are also available from Clariant, e.g. the product Sandopan® DTC, a C₁₃ alkyl polyethoxy (7) carboxylic acid.

### Amphoteric Surfactants

Amphoteric, or ampholytic, surfactants contain both a basic and an acidic hydrophilic group and an organic hydrophobic group. These ionic entities may be any of anionic or cationic groups described herein for other types of surfactants. A basic nitrogen and an acidic carboxylate group are the typical functional groups employed as the basic and acidic hydrophilic groups. In a few surfactants, sulfonate, sulfate, phosphonate or phosphate provide the negative charge.

Amphoteric surfactants can be broadly described as derivatives of aliphatic secondary and tertiary amines, in which the aliphatic radical may be straight chain or branched and wherein one of the aliphatic substituents contains from 8 to 18 carbon atoms and one contains an anionic water solubilizing group, e.g., carboxy, sulfo, sulfato, phosphato, or phosphono. Amphoteric surfactants are subdivided into two major classes known to those of skill in the art and described in "Surfactant Encyclopedia" Cosmetics & Toiletries, Vol. 104 (2) 69-71 (1989). The first class includes acyl/dialkyl ethylenediamine derivatives (e.g. 2-alkyl hydroxyethyl imidazoline derivatives) and their salts. The second class includes N-alkylamino acids and their salts. Some amphoteric surfactants can be envisioned as fitting into both classes.

Amphoteric surfactants can be synthesized by methods known to those of skill in the art. For example, 2-alkyl hydroxyethyl imidazoline is synthesized by condensation and ring closure of a long chain carboxylic acid (or a derivative) with dialkyl ethylenediamine. Commercial amphoteric surfactants are derivatized by subsequent hydrolysis and ring-opening of the imidazoline ring by alkylation -- for example with chloroacetic acid or ethyl acetate. During alkylation, one or two carboxy-alkyl groups react to form a tertiary amine and an ether linkage with differing alkylating agents yielding different tertiary amines.

Long chain imidazoline derivatives having application in the present invention generally have the general formula: 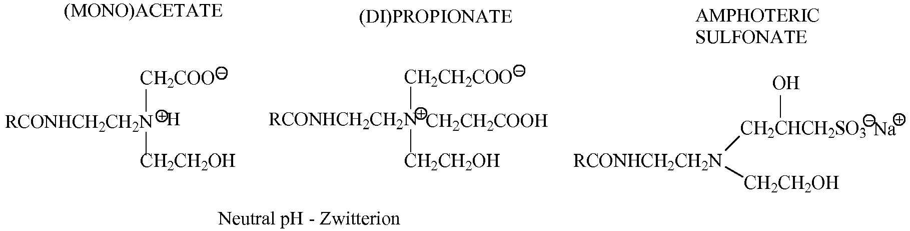 wherein R is an acyclic hydrophobic group containing from 8 to 18 carbon atoms and M is a cation to neutralize the charge of the anion, generally sodium. Commercially prominent imidazoline-derived amphoterics that can be employed in the present compositions include for example: Cocoamphopropionate, Cocoamphocarboxy-propionate, Cocoamphoglycinate, Cocoamphocarboxy-glycinate, Cocoamphopropyl-sulfonate, and Cocoamphocarboxy-propionic acid. Amphocarboxylic acids can be produced from fatty imidazolines in which the dicarboxylic acid functionality of the amphodicarboxylic acid is diacetic acid and/or dipropionic acid.

The carboxymethylated compounds (glycinates) described herein above frequently are called betaines. Betaines are a special class of amphoteric discussed herein below in the section entitled, Zwitterion Surfactants.

Long chain N-alkylamino acids are readily prepared by reaction RNH₂, in which R=C₈-C₁₈ straight or branched chain alkyl, fatty amines with halogenated carboxylic acids. Alkylation of the primary amino groups of an amino acid leads to secondary and tertiary amines. Alkyl substituents may have additional amino groups that provide more than one reactive nitrogen center. Most commercial N-alkylamine acids are alkyl derivatives of beta-alanine or beta-N(2-carboxyethyl) alanine. Examples of commercial N-alkylamino acid ampholytes having application in this invention include alkyl beta-amino dipropionates, RN(C₂H₄COOM)₂ and RNHC₂H₄COOM. R can be an acyclic hydrophobic group containing from 8 to 18 carbon atoms, and M is a cation to neutralize the charge of the anion.

Suitable amphoteric surfactants include those derived from coconut products such as coconut oil or coconut fatty acid. Additional suitable coconut derived surfactants include as part of their structure an ethylenediamine moiety, an alkanolamide moiety, an amino acid moiety, e.g., glycine, or a combination thereof; and an aliphatic substituent of from 8 to 18 (e.g., 12) carbon atoms. Such a surfactant can also be considered an alkyl amphodicarboxylic acid. These amphoteric surfactants can include chemical structures represented as: C₁₂-alkyl-C(O)-NH-CH₂-CH₂-N⁺(CH₂-CH₂-CO₂Na)₂-CH₂-CH₂-OH or C₁₂-alkyl-C(O)-N(H)-CH₂-CH₂-N⁺(CH₂-CO₂Na)₂-CH₂-CH₂-OH. Disodium cocoampho dipropionate is one suitable amphoteric surfactant and is commercially available under the tradename Miranol™ FBS from Rhodia Inc., Cranbury, N.J. Another suitable coconut derived amphoteric surfactant with the chemical name disodium cocoampho diacetate is sold under the tradename Mirataine™ JCHA, also from Rhodia Inc., Cranbury, N.J.

A typical listing of amphoteric classes, and species of these surfactants, is given in U.S. Pat. No. 3,929,678 issued to Laughlin and Heuring on Dec. 30, 1975. Further examples are given in "Surface Active Agents and Detergents" (Vol. I and II by Schwartz, Perry and Berch).

### Zwitterionic Surfactants

Zwitterionic surfactants can be thought of as a subset of the amphoteric surfactants and can include an anionic charge. Zwitterionic surfactants can be broadly described as derivatives of secondary and tertiary amines, derivatives of heterocyclic secondary and tertiary amines, or derivatives of quaternary ammonium, quaternary phosphonium or tertiary sulfonium compounds. Typically, a zwitterionic surfactant includes a positive charged quaternary ammonium or, in some cases, a sulfonium or phosphonium ion; a negative charged carboxyl group; and an alkyl group. Zwitterionics generally contain cationic and anionic groups which ionize to a nearly equal degree in the isoelectric region of the molecule and which can develop strong" inner-salt" attraction between positive-negative charge centers. Examples of such zwitterionic synthetic surfactants include derivatives of aliphatic quaternary ammonium, phosphonium, and sulfonium compounds, in which the aliphatic radicals can be straight chain or branched, and wherein one of the aliphatic substituents contains from 8 to 18 carbon atoms and one contains an anionic water solubilizing group, e.g., carboxy, sulfonate, sulfate, phosphate, or phosphonate. Betaine and sultaine surfactants are exemplary zwitterionic surfactants for use herein.

A general formula for these compounds is: 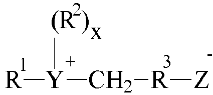 wherein R¹ contains an alkyl, alkenyl, or hydroxyalkyl radical of from 8 to 18 carbon atoms having from 0 to 10 ethylene oxide moieties and from 0 to 1 glyceryl moiety; Y is selected from the group consisting of nitrogen, phosphorus, and sulfur atoms; R² is an alkyl or monohydroxy alkyl group containing 1 to 3 carbon atoms; x is 1 when Y is a sulfur atom and 2 when Y is a nitrogen or phosphorus atom, R³ is an alkylene or hydroxy alkylene or hydroxy alkylene of from 1 to 4 carbon atoms and Z is a radical selected from the group consisting of carboxylate, sulfonate, sulfate, phosphonate, and phosphate groups.

Examples of zwitterionic surfactants having the structures listed above include: 4-[N,N-di(2-hydroxyethyl)-N-octadecylammonio]-butane-1-carboxylate; 5-[S-3-hydroxypropyl-S-hexadecylsulfonio]-3-hydroxypentane-1-sulfate; 3-[P,P-diethyl-P-3,6,9-trioxatetracosanephosphonio]-2-hydroxypropane-1-phosphate; 3-[N,N-dipropyl-N-3-dodecoxy-2-hydroxypropyl-ammonio]-propane-1-phosphonate; 3-(N,N-dimethyl-N-hexadecylammonio)-propane-1-sulfonate; 3-(N,N-dimethyl-N-hexadecylammonio)-2-hydroxy-propane-1-sulfonate; 4-[N,N-di(2(2-hydroxyethyl)-N(2-hydroxydodecyl)ammonio]-butane-1-carboxylate; 3-[S-ethyl-S-(3-dodecoxy-2-hydroxypropyl)sulfonio]-propane-1-phosphate; 3-[P,P-dimethyl-P-dodecylphosphonio]-propane-1-phosphonate; and S[N,N-di(3-hydroxypropyl)-N-hexadecylammonio]-2-hydroxy-pentane-1-sulfate. The alkyl groups contained in said detergent surfactants can be straight or branched and saturated or unsaturated.

The zwitterionic surfactant suitable for use in the present compositions includes a betaine of the general structure: 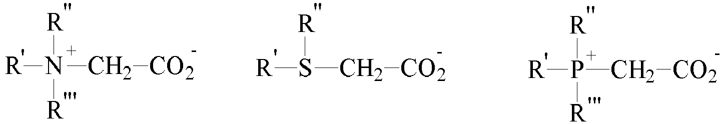 These surfactant betaines typically do not exhibit strong cationic or anionic characters at pH extremes nor do they show reduced water solubility in their isoelectric range. Unlike "external" quaternary ammonium salts, betaines are compatible with anionics. Examples of suitable betaines include coconut acylamidopropyldimethyl betaine; hexadecyl dimethyl betaine; C₁₂₋₁₄ acylamidopropylbetaine; C₈₋₁₄ acylamidohexyldiethyl betaine; 4-C₁₄₋₁₆ acylmethylamidodiethylammonio-1-carboxybutane; C₁₆₋₁₈ acylamidodimethylbetaine; C₁₂₋₁₆ acylamidopentanediethylbetaine; and C₁₂₋₁₆ acylmethylamidodimethylbetaine.

Sultaines useful in the present invention include those compounds having the formula (R(R¹)₂ N⁺ R²SO³⁻, in which R is a C₆ -C₁₈ hydrocarbyl group, each R¹ is typically independently C₁-C₃ alkyl, e.g. methyl, and R² is a C₁-C₆ hydrocarbyl group, e.g. a C₁-C₃ alkylene or hydroxyalkylene group.

A typical listing of zwitterionic classes, and species of these surfactants, is given in U.S. Pat. No. 3,929,678 issued to Laughlin and Heuring on Dec. 30, 1975. Further examples are given in "Surface Active Agents and Detergents" (Vol. I and II by Schwartz, Perry and Berch).

The composition of the present invention may include a betaine. For example, the composition can include cocoamidopropyl betaine.

### Carrier

The composition of the invention also includes a carrier. The carrier provides a medium which dissolves, suspends, or carries the other components of the composition. For example, the carrier can provide a medium for solubilization, suspension, or production of peroxycarboxylic acid and for forming an equilibrium mixture. The carrier can also function to deliver and wet the antimicrobial composition of the invention on an object. To this end, the carrier can contain any component or components that can facilitate these functions.

The carrier includes primarily water which can promote solubility and work as a medium for reaction and equilibrium.

The carrier may make up a large portion of the composition of the invention and may be the balance of the composition apart from the active antimicrobial components, solubilizer, oxidizing agent, adjuvants, and the like. Here again, the carrier concentration and type will depend upon the nature of the composition as a whole, the environmental storage, and method of application including concentration of the medium chain peroxycarboxylic acid, among other factors. Notably the carrier should be chosen and used at a concentration which does not inhibit the antimicrobial efficacy of the medium chain peroxycarboxylic acid in the composition of the invention.

The present composition includes 5 to 76.5 wt-% water

### Oxidizing Agent

The present compositions and methods include any of a variety of oxidizing agents. The oxidizing agent can be used for maintaining or generating peroxycarboxylic acids.

Examples of inorganic oxidizing agents include the following types of compounds or sources of these compounds, or alkali metal salts including these types of compounds, or forming an adduct therewith:
hydrogen peroxide;
group 1 (IA) oxidizing agents, for example lithium peroxide, sodium peroxide, and the like;
group 2 (IIA) oxidizing agents, for example magnesium peroxide, calcium peroxide, strontium peroxide, barium peroxide, and the like;
group 12 (IIB) oxidizing agents, for example zinc peroxide, and the like;
group 13 (IIIA) oxidizing agents, for example boron compounds, such as perborates, for example sodium perborate hexahydrate of the formula Na₂[Br₂(O₂)₂(OH)₄]•6H₂O (also called sodium perborate tetrahydrate and formerly written as NaBO₃•4H₂O); sodium peroxyborate tetrahydrate of the formula Na₂Br₂(O₂)₂[(OH)₄]•4H₂O (also called sodium perborate trihydrate, and formerly written as NaBO₃•3H₂O); sodium peroxyborate of the formula Na₂[B₂(O₂)₂(OH)₄] (also called sodium perborate monohydrate and formerly written as NaBO₃•H₂O); and the like; group 14 (IVA) oxidizing agents, for example persilicates and peroxycarbonates, which are also called percarbonates, such as persilicates or peroxycarbonates of alkali metals; and the like; group 15 (VA) oxidizing agents, for example peroxynitrous acid and its salts; peroxyphosphoric acids and their salts, for example, perphosphates; and the like; group 16 (VIA) oxidizing agents, for example peroxysulfuric acids and their salts, such as peroxymonosulfuric and peroxydisulfuric acids, and their salts, such as persulfates, for example, sodium persulfate; and the like; group VIIa oxidizing agents such as sodium periodate, potassium perchlorate and the like.

Other active inorganic oxygen compounds can include transition metal peroxides; and other such peroxygen compounds, and mixtures thereof.

The compositions and methods of the present invention may employ one or more (e.g., at least one) of the inorganic oxidizing agents listed above. Suitable inorganic oxidizing agents include ozone, hydrogen peroxide, hydrogen peroxide adduct, group IIIA oxidizing agent, group VIA oxidizing agent, group VA oxidizing agent, group VIIA oxidizing agent, or mixtures thereof. Suitable examples of such inorganic oxidizing agents include percarbonate, perborate, persulfate, perphosphate, persilicate, or mixtures thereof.

Hydrogen peroxide presents one suitable example of an inorganic oxidizing agent. Hydrogen peroxide can be provided as a mixture of hydrogen peroxide and water, e.g., as liquid hydrogen peroxide in an aqueous solution. Hydrogen peroxide is commercially available at concentrations of 35%, 70%, and 90% in water. For safety, the 35% is commonly usedThe inorganic oxidizing agent may include a hydrogen peroxide adduct. For example, the inorganic oxidizing agent can include hydrogen peroxide, hydrogen peroxide adduct, or mixtures thereof. Any of a variety of hydrogen peroxide adducts are suitable for use in the present compositions and methods. For example, suitable hydrogen peroxide adducts include percarbonate salt, urea peroxide, peracetyl borate, an adduct of H₂O₂ and polyvinyl pyrrolidone, sodium percarbonate, potassium percarbonate, mixtures thereof, or the like. Suitable hydrogen peroxide adducts include percarbonate salt, urea peroxide, peracetyl borate, an adduct of H₂O₂ and polyvinyl pyrrolidone, or mixtures thereof. Suitable hydrogen peroxide adducts include sodium percarbonate, potassium percarbonate, or mixtures thereof, for example sodium percarbonate.

The present compositions and methods can include hydrogen peroxide as oxidizing agent. Hydrogen peroxide in combination with the percarboxylic acid can provide certain antimicrobial action against microorganisms. Additionally, hydrogen peroxide can provide an effervescent action which can irrigate any surface to which it is applied. Hydrogen peroxide can work with a mechanical flushing action once applied which further cleans the surface of an object. An additional advantage of hydrogen peroxide is the food compatibility of this composition upon use and decomposition.

The present composition includes 5 to 10 wt-% oxidizing agent.

### Acidulant

The present composition includes an acidulant. The acidulant can act as a catalyst for conversion of carboxylic acid to peroxycarboxylic acid. The acidulant can be effective to form a concentrate composition with pH of 1 or less. The acidulant can be effective to form a use composition with pH of 5, 5 or less, 4, 4 or less, 3, 3 or less, 2, 2 or less, or the likeThe acidulant includes an inorganic acid. Suitable inorganic acids include sulfuric acid, phosphoric acid, nitric acid, hydrochloric acid, methane sulfonic acid, ethane sulfonic acid, propane sulfonic acid, butane sulfonic acid, xylene sulfonic acid, benzene sulfonic acid, mixtures thereof, or the like.

The present composition includes 15 to 35 wt-% inorganic acid

### Stabilizing Agent

One or more stabilizing agents are added to the composition of the invention, for example, to stabilize the peracid and hydrogen peroxide and prevent the premature oxidation of this constituent within the composition of the invention.

The stabilizing agents are sequestrants. Suitable sequestrants include organic chelating compounds that sequester metal ions in solution, particularly transition metal ions. Such sequestrants include organic amino- or hydroxy-polyphosphonic acid complexing agents (either in acid or soluble salt forms), carboxylic acids (e.g., polymeric polycarboxylate), hydroxycarboxylic acids, or aminocarboxylic acids.

The sequestrant can be or include phosphonic acid or phosphonate salt. Suitable phosphonic acids and phosphonate salts include 1-hydroxy ethylidene-1,1-diphosphonic acid (CH₃C(PO₃H₂)₂OH) (HEDP); ethylenediamine tetrakis methylenephosphonic acid (EDTMP); diethylenetriamine pentakis methylenephosphonic acid (DTPMP); cyclohexane-1,2-tetramethylene phosphonic acid; amino[tri(methylene phosphonic acid)]; (ethylene diamine[tetra methylenephosphonic acid)]; 2-phosphene butane-1,2,4-tricarboxylic acid; or salts thereof, such as the alkali metal salts, ammonium salts, or alkyloyl amine salts, such as mono, di, or tetra-ethanolamine salts; or mixtures thereof.

Suitable organic phosphonates include HEDP.

The sequestrant can be or include aminocarboxylic acid type sequestrant. Suitable aminocarboxylic acid type sequestrants include the acids or alkali metal salts thereof, e.g., amino acetates and salts thereof. Suitable aminocarboxylates include N-hydroxyethylaminodiacetic acid; hydroxyethylenediaminetetraacetic acid, nitrilotriacetic acid (NTA); ethylenediaminetetraacetic acid (EDTA); N-hydroxyethyl-ethylenediaminetriacetic acid (HEDTA); diethylenetriaminepentaacetic acid (DTPA); and
alanine-N,N-diacetic acid; and the like; and mixtures thereof.

The sequestrant can be or include a polycarboxylate. Suitable polycarboxylates include, for example, polyacrylic acid, maleic/olefin copolymer, acrylic/maleic copolymer, polymethacrylic acid, acrylic acid-methacrylic acid copolymers, hydrolyzed polyacrylamide, hydrolyzed polymethacrylamide, hydrolyzed polyamide-methacrylamide copolymers, hydrolyzed polyacrylonitrile, hydrolyzed polymethacrylonitrile, hydrolyzed acrylonitrile-methacrylonitrile copolymers, polymaleic acid, polyfumaric acid, copolymers of acrylic and itaconic acid, phosphino polycarboxylate, acid or salt forms thereof, mixtures thereof, and the like.

The present composition includes 1 to 5 wt-% sequestrant.

### Adjuvants

The antimicrobial composition of the invention can also include any number of adjuvants. Specifically, the composition of the invention can include antimicrobial solvent, antimicrobial agent, wetting agent, defoaming agent, thickener, a surfactant, foaming agent, solidification agent, aesthetic enhancing agent (i.e., colorant (e.g., pigment), odorant, or perfume), among any number of constituents which can be added to the composition. Such adjuvants can be preformulated with the antimicrobial composition of the invention or added to the system simultaneously, or even after, the addition of the antimicrobial composition. The composition of the invention can also contain any number of other constituents as necessitated by the application, which are known and which can facilitate the activity of the present invention.

### Antimicrobial Solvent

Any of a variety of solvents can be useful as antimicrobial solvents in the present compositions. Antimicrobial solvent can be added to use compositions before use. Suitable antimicrobial solvents include acetamidophenol; acetanilide; acetophenone; 2-acetyl-1-methylpyrrole; benzyl acetate; benzyl alcohol; benzyl benzoate; benzyloxyethanol; essential oils (e.g., benzaldehyde, pinenes, terpineols, terpinenes, carvone, cinnamealdehyde, borneol and its esters, citrals, ionenes, jasmine oil, limonene, dipentene, linalool and its esters); diester dicarboxylates (e.g., dibasic esters) such as dimethyl adipate, dimethyl succinate, dimethyl glutarate (including products available under the trade designations DBE, DBE-3, DBE-4, DBE-5, DBE-6, DBE-9, DBE-IB, and DBE-ME from DuPont Nylon), dimethyl malonate, diethyl adipate, diethyl succinate, diethyl glutarate, dibutyl succinate, and dibutyl glutarate; dimethyl sebacate, dimethyl pimelate, dimethyl suberate; dialkyl carbonates such as dimethyl carbonate, diethyl carbonate, dipropyl carbonate, diisopropyl carbonate, and dibutyl carbonate; organo-nitriles such as acetonitrile and benzonitrile; and phthalate esters such as dibutyl phthalate, diethylhexyl phthalate, and diethyl phthalate. Mixtures of antimicrobial solvents can be used if desired.

The antimicrobial solvent can be selected based upon the characteristics of the surface and microbes to which the antimicrobial composition will be applied and upon the nature of any coating, soil or other material that will be contacted by the antimicrobial composition and optionally removed from the surface. Polar solvents, and solvents that are capable of hydrogen bonding typically will perform well on a variety of surfaces and microbes and thus, for such applications, can be selected. In certain applications, the antimicrobial solvent can be selected for a high flashpoint (e.g., greater than 30°C, greater than 50°C, or greater than 100°C), low odor, and low human and animal toxicity.

The antimicrobial solvent may be compatible as an indirect or direct food additive or substance; especially those described in the Code of Federal Regulations (CFR), Title 21--Food and Drugs, parts 170 to 186. The compositions of the invention should contain sufficient antimicrobial solvent to provide the desired rate and type of microbial reduction.

The present composition can include an effective amount of antimicrobial solvent, such as 0.01 wt-% to 60 wt-% antimicrobial solvent, 0.05 wt-% to 15 wt-% antimicrobial solvent, or 0.08 wt-% to 5 wt-% antimicrobial solvent.

### Additional Antimicrobial Agent

The antimicrobial compositions of the invention can contain an additional antimicrobial agent. Additional antimicrobial agent can be added to use compositions before use. Suitable antimicrobial agents include carboxylic esters (e.g., p-hydroxy alkyl benzoates and alkyl cinnamates), sulfonic acids (e.g., dodecylbenzene sulfonic acid), iodo-compounds or active halogen compounds (e.g., elemental halogens, halogen oxides (e.g., NaOCl, HOCl, HOBr, ClO₂), iodine, interhalides (e.g., iodine monochloride, iodine dichloride, iodine trichloride, iodine tetrachloride, bromine chloride, iodine monobromide, or iodine dibromide), polyhalides, hypochlorite salts, hypochlorous acid, hypobromite salts, hypobromous acid, chloro- and bromo-hydantoins, chlorine dioxide, and sodium chlorite), organic peroxides including benzoyl peroxide, alkyl benzoyl peroxides, ozone, singlet oxygen generators, and mixtures thereof, phenolic derivatives (e.g., o-phenyl phenol, o-benzyl-p-chlorophenol, tert-amyl phenol and C₁-C₆ alkyl hydroxy benzoates), quaternary ammonium compounds (e.g., alkyldimethylbenzyl ammonium chloride, dialkyldimethyl ammonium chloride and mixtures thereof), and mixtures of such antimicrobial agents, in an amount sufficient to provide the desired degree of microbial protection.

The present composition can include an effective amount of antimicrobial agent, such as 0.001 wt-% to 60 wt-% antimicrobial agent, 0.01 wt-% to 15 wt-% antimicrobial agent, or 0.08 wt-% to 2.5 wt-% antimicrobial agent.

### Wetting or Defoaming Agents

Also useful in the composition of the invention are wetting and defoaming agents. Wetting agents function to increase the surface contact or penetration activity of the antimicrobial composition of the invention. Wetting agents which can be used in the composition of the invention include any of those constituents known within the art to raise the surface activity of the composition of the invention.

Suitable defoamers which can be used in accordance with the invention include silica and silicones; aliphatic acids or esters; alcohols; sulfates or sulfonates; amines or amides; halogenated compounds such as fluorochlorohydrocarbons; vegetable oils, waxes, mineral oils as well as their sulfated derivatives; fatty acid soaps such as alkali, alkaline earth metal soaps; and phosphates and phosphate esters such as alkyl and alkaline diphosphates, and tributyl phosphates among others; and mixtures thereof.

The present compositions can include antifoaming agents or defoamers which are of food grade quality given the application of the method of the invention. To this end, one of the more effective antifoaming agents includes silicones. Silicones such as dimethyl silicone, glycol polysiloxane, methylphenol polysiloxane, trialkyl or tetralkyl silanes, hydrophobic silica defoamers and mixtures thereof can all be used in defoaming applications. Commercial defoamers commonly available include silicones such as Ardefoam® from Armour Industrial Chemical Company which is a silicone bound in an organic emulsion; Foam Kill® or Kresseo® available from Krusable Chemical Company which are silicone and non-silicone type defoamers as well as silicone esters; and Anti-Foam A® and DC-200 from Dow Corning Corporation which are both food grade type silicones among others. These defoamers can be present at a concentration range from 0.01 wt-% to 5 wt-%, from 0.01 wt-% to 2 wt-%, or from 0.01 wt-% to 1 wt-%.

### Thickening or Gelling Agents

The present compositions can include any of a variety of known thickeners. Suitable thickeners include natural gums such as xanthan gum, guar gum, or other gums from plant mucilage; polysaccharide based thickeners, such as alginates, starches, and cellulosic polymers (e.g., carboxymethyl cellulose); polyacrylates thickeners; and hydrocolloid thickeners, such as pectin. The thickener may not leave contaminating residue on the surface of an object. For example, the thickeners or gelling agents can be compatible with food or other sensitive products in contact areas. Generally, the concentration of thickener employed in the present compositions or methods will be dictated by the desired viscosity within the final composition. However, as a general guideline, the viscosity of thickener within the present composition ranges from 0.1 wt-% to 1.5 wt-%, from 0.1 wt-% to 1.0 wt-%, or from 0.1 wt-% to 0.5 wt-%.

### Solidification Agent

The present compositions can include a solidification agent, which can participate in maintaining the compositions in a solid form. Suitable solidification agents include a solid polyethylene glycol (PEG), a solid EO/PO block copolymer, and the like; an amide, such as stearic monoethanolamide, lauric diethanolamide, an alkylamide, or the like; starches that have been made water-soluble through an acid or alkaline treatment process; celluloses that have been made water-soluble; an inorganic agent, or the like; poly(maleic anhydride/methyl vinyl ether); polymethacrylic acid; other generally functional or inert materials with high melting points; and the like.

The solidification agent includes solid PEG, for example PEG 1500 up to PEG 20,000. The PEG may include PEG 1450, PEG 3350, PEG 4500, PEG 8000, PEG 20,000, and the like. Additional suitable solidification agents include EO/PO block copolymers such as those sold under the tradenames Pluronic 108, Pluronic F68; amides such as lauric diethanolamide or cocodiethylene amide; and the like. The solidification agent can include a combination of solidification agents, such as combination of PEG and an EO/PO block copolymer (such as a Pluronic) and combination of PEG and an amide (such as lauric diethanolamide amide or stearic monoethanol amide).

### Fragrance

The present composition may include a fragrance. The fragrance can be selected to avoid undesirable effects on the stability or efficacy of the composition. Suitable fragrances include amyl acetate, iso-bornyl acetate, and alkyl salicylates, such as methyl salicylate. The fragrance can include an alkylsalicylate.

### Use Compositions

The present compositions include concentrate compositions. A concentrate composition can be diluted, for example with water, to form a use compositionA concentrate composition can be diluted to a use solution before to application to an object. For reasons of economics, the concentrate can be marketed and an end user can dilute the concentrate with water or an aqueous diluent to a use solution.

The level of active components in the concentrate composition is dependent on the intended dilution factor and the desired activity of the medium chain peroxycarboxylic acid compound. Generally, a dilution of 1 fluid ounce to 20 gallons of water to 5 fluid ounces to 1 gallon of water is used for aqueous antimicrobial compositions. Higher use dilutions can be employed if elevated use temperature (greater than 25 °C) or extended exposure time (greater than 30 seconds) can be employed. In the typical use locus, the concentrate is diluted with a major proportion of water using commonly available tap or service water mixing the materials at a dilution ratio of 3 to 20 ounces of concentrate per 100 gallons of water.

For example, a use composition can include 0.01 to 4 wt-% of a concentrate composition and 96 to 99.99 wt-% diluent; 0.5 to 4 wt-% of a concentrate composition and 96 to 99.5 wt-% diluent; 0.5, 1, 1.5, 2, 2.5, 3, 3.5, or 4 wt-% of a concentrate composition; 0.01 to 0.1 wt-% of a concentrate composition; or 0.01, 0.02, 0.03, 0.04, 0.05, 0.06, 0.07, 0.08, 0.09, or 0.1 wt-% of a concentrate composition. Amounts of an ingredient in a use composition can be calculated from the amounts listed above for concentrate compositions and these dilution factors.

The present methods can employ medium chain peroxycarboxylic acid at a concentration effective for reducing the population of one or more microorganisms. Such effective concentrations include 2 to 500 ppm medium chain peroxycarboxylic acid, 2 to 300 ppm medium chain peroxycarboxylic acid, 5 to 100 ppm medium chain peroxycarboxylic acid, 5 to 60 ppm medium chain peroxycarboxylic acid, 5 to 45 ppm medium chain peroxycarboxylic acid, 5 to 35 ppm medium chain peroxycarboxylic acid, 5 to 25 ppm medium chain peroxycarboxylic acid, 8 to 50 ppm medium chain peroxycarboxylic acid, 10 to 500 ppm medium chain peroxycarboxylic acid, 10 to 50 ppm medium chain peroxycarboxylic acid, 40 to 140 ppm medium chain peroxycarboxylic acid, 100 to 250 ppm medium chain peroxycarboxylic acid, or 200 to 300 ppm medium chain peroxycarboxylic acidThe use composition can include 2 to 500 ppm medium chain peroxycarboxylic acid, 5 to 2000 ppm medium chain carboxylic acid, 95 to 99.99 wt-% carrier and/or diluent (e.g., water); and 2 to 23,000 ppm polyalkylene oxide, capped polyalkylene oxide, alkoxylated surfactant, anionic surfactant, or mixture thereof.

The level of reactive species, such as peroxycarboxylic acids and/or hydrogen peroxide, in a use composition can be affected, typically diminished, by organic matter that is found in or added to the use composition. For example, when the use composition is a bath or spray used for washing an object, soil on the object can consume peroxy acid and peroxide. Thus, the present amounts of ingredients in the use compositions refer to the composition before or early in use, with the understanding that the amounts will diminish as organic matter is added to the use composition.

The present use composition can be made more acidic by passing the concentrate through an acidifying column, or by adding additional acidulant to the use composition.

### Making Medium Chain Peroxycarboxylic Acid Compositions

The compositions of or used in the methods of the invention can be made by combining or reacting the medium chain carboxylic acid and the oxidizing agent, such as hydrogen peroxide. Combining or reacting medium chain carboxylic acid and oxidizing agent results in production of medium chain peroxycarboxylic acid. Ccombining includes mixing. The formulation combined for making the present compositions can also include the solubilizer, the acidulant, the carrier, stabilizing agent, mixtures thereof, or the likeThe formulation includes solubilizer. Alternatively, one or more (e.g., at least one) of the solubilizer, the acidulant, the carrier, or mixtures thereof, can be added after production of some or all of the peroxycarboxylic acid.

The method of making a medium chain peroxycarboxylic acid can include combining or reacting medium chain carboxylic acid, carrier (e.g., water), oxidizing agent (e.g., hydrogen peroxide), solubilizer, acidulant, and stabilizing agent. The method can include mixing the ingredients at concentrations of 1 to 10 wt-% medium chain carboxylic acid, 0 to 98 wt-% carrier, 2 to 30 wt-% oxidizing agent, 1 to 80 wt-% solubilizer, 1 to 50 wt-% acidulant, and 0.5 to 50 wt-% stabilizing agent. The method can include mixing the ingredients at concentrations 1 to 10 wt-% medium chain carboxylic acid, 5 to 97 wt-% carrier, 2 to 30 wt-% oxidizing agent, 1 to 20 wt-% solubilizer (e.g., microemulsion forming surfactant), 1 to 50 wt-% acidulant, and 0.5 to 50 wt-% stabilizing agent. The present compositions also include compositions in which these combinations of ingredients have come to equilibrium forming medium chain peroxycarboxylic acid.

The present method may produce advantageously high levels of medium chain peroxycarboxylic acid in advantageously short times. Advantageously short times include, for example, 24 or fewer hours, 6 or fewer hours, 3 or fewer hours, or 0.5 hr. High levels of medium chain peroxycarboxylic acid can be achieved nearly instantaneously. High levels of medium chain peroxycarboxylic acid be achieved by converting 20% or more, 25% or more, 30% or more, 35% or more, or 40% of the medium chain carboxylic acid to medium chain peroxycarboxylic acid. Such conversions can be achieved at room temperature or in a reaction started at room temperature and warmed by an exotherm. Lower temperatures can require a longer time to reach the same amount of conversion. The amount of time is typically measured from the time that the carboxylic acid, oxidizing agent, solubilizer, and acidulant are combined or reacted.

For example, the present method can convert 20% or more of the medium chain carboxylic acid to medium chain peroxycarboxylic acid in 24 or fewer hours. For example, the present method can convert 25% or more of the medium chain carboxylic acid to medium chain peroxycarboxylic acid in 24 or fewer hours. For example the present method can convert 30% or more of the medium chain carboxylic acid to medium chain peroxycarboxylic acid in 24 or fewer hours. For example, the present method can convert 35% or more of the medium chain carboxylic acid to medium chain peroxycarboxylic acid in 24 or fewer hours. For example, the present method can convert 40% of the medium chain carboxylic acid to medium chain peroxycarboxylic acid in 24 or fewer hours.

Making the present compositions includes forming a microemulsion. A microemulsion can be formed by mixing the desired ingredients including a microemulsion forming surfactant. The method can include combining or mixing the ingredients at concentration of 1 to 10 wt-% medium chain carboxylic acid, 5 to 76.5 wt-% carrier (water), 5 to 10 wt-% oxidizing agent, 1 to 20 wt-% microemulsion forming surfactant, and 1 to 5 wt-% stabilizer. The present compositions also include compositions in which these combinations of ingredients have come to equilibrium forming medium chain peroxycarboxylic acid. The components can be added in any of a variety of orders. Formation of the medium chain peroxy carboxylic acid can proceed rapidly after the addition of the microemulsion forming surfactant. Although not limiting to the present invention, it is believed that the formation of the microemulsion can significantly increase the effective surface area of the medium chain carboxylic acid (as micro-droplets) for reaction.

The present compositions can be made in a plant as a concentrate and shipped to an end user who need only dilute the concentrate to form a use composition. The present medium chain peroxycarboxylic acid compositions can also be made at the site of use. For example, the product can be shipped as a two or more part composition or as a kit. The user can then combine the two or more compositions or components of the kit to produce the present medium chain peroxycarboxylic acid compositions. Alternatively, a system of formulating equipment and containers of raw materials can be provided at the site of use, and programmed or operated to mix and disperse the present medium chain peroxycarboxylic acid compositions.

The product can be supplied as a two or more part composition. One composition can include carboxylic acid and one or more (e.g., at least one) of solubilizer, acidulant, carrier, stabilizing agent, mixtures thereof, or the like. The second composition can include oxidizing agent and one or more (e.g., at least one) of solubilizer, acidulant, carrier, stabilizing agent mixtures thereof, or the like. Alternatively, the solubilizer, acidulant, carrier, stabilizing agent mixtures thereof, or the like can be supplied as additional composition(s).

The pH of a concentrate composition can be less than 1 or 2. The pH of a 1% or 1.5% solution of the mixture in water may be 1 or 2 to 7, depending on the other components of the 1% solutionThe pH of a use composition can be from 2 to 7 depending on the other components.

The present invention may be better understood with reference to the following examples.

### EXAMPLES

### Example 1 - - Compositions Including Medium Chain Peroxycarboxylic Acid and Solubilizer

Tables 1-5 present illustrative examples of the present compositions including medium chain peroxycarboxylic acid and solubilizer. Quantities in the tables are in wt-%.

**Table 1 - Examples of Compositions Including Solvent Solubilizer**

| Ingredient | A | B | C | D | E |
|---|---|---|---|---|---|
| Medium Chain Peroxycarboxylic Acid | 1.8 | 1.6 | 1.4 | 1.6 | 2.9 |
| Medium Chain Carboxylic Acid | 3.4 | 3.6 | 3.7 | 3.6 | 2.4 |
| Solubilizer | 60 | 40 | 60 | 60 | 40 |
| Carrier | 25 | 22 | 25 | 22 | 22 |
| Oxidizing Agent | 7.0 | 6.6 | 7.0 | 6.9 | 6.9 |
| Acidulant | 2 | 25 | 2 | 5 | 25 |
| Stabilizing Agent | 1.2 | 1.2 | 1.2 | 1.2 | 1.2 |

In each of compositions A-Q: the medium chain peroxycarboxylic acid was peroxyoctanoic acid; the medium chain carboxylic acid was octanoic acid; the carrier was water; the oxidizing agent was hydrogen peroxide (supplied from a 35% solution); and the stabilizing agent was HEDP (supplied as Dequest 2010 which includes 60 wt-% HEDP).

In each of compositions A-L, O, P, and Q: the acidulant was concentrated sulfuric acid. In compositions M and N, the acidulant was phosphoric acid (supplied as 85% and 75% phosphoric acid, respectively).
The solubilizer was varied among these compositions. In compositions A and B, the solubilizer was polyethyleneglycol 300. In compositions C, D, and E, the solubilizer was monomethyl ether of polyethyleneglycol (MPEG 550). In composition F, the solubilizer was nonionic surfactant, specifically Pluronic 17R4 an (PO)ₓ(EO)_{y}(PO)ₓ reverse triblock copolymer with 40% EO and 60% PO. In composition G, the solubilizer was polyethyleneglycol 300 plus LAS acid (98% linear dodecylbenzene sulfonic acid). In composition H, the solubilizer was polyethyleneglycol 300 plus 1-octane sulfonate (supplied under the tradename NAS-FAL as 38% active). In composition I, the solubilizer was polyethyleneglycol 300 plus Dowfax Hydrotrope acid (C₆ alkylated diphenyl oxide disulfonic acid). In composition J, the solubilizer was dimethyl ether of polyethyleneglycol (PolyDME250) and LAS acid. In composition K, the solubilizer was dimethyl ether of polyethyleneglycol (PolyDME250) and NAS-FAL. In composition L, the solubilizer was dimethyl ether of polyethyleneglycol (PolyDME250) and Dowfax Hydrotrope acid. In compositions M, N, O and P, the solubilizer was dimethyl ether of polyethyleneglycol (PolyDME250) and NAS-FAL. In composition Q, the solubilizer was dimethyl ether of polyethyleneglycol (PolyDME250) and NAS acid (supplied as 93% 1-octane sulfonic acid).

These compositions were made from a composition including 5 wt-% medium chain carboxylic acid.

In each of compositions R-Z: the medium chain peroxycarboxylic acid was peroxyoctanoic acid; the medium chain carboxylic acid was octanoic acid; the carrier was water; the oxidizing agent was hydrogen peroxide (supplied from a 35% solution); and the stabilizing agent was HEDP (supplied as Dequest 2010 which includes 60 wt-% HEDP).

In compositions R and S, the acidulant was phosphoric acid (supplied as 75% phosphoric acid). In each of compositions T, U, and V, the acidulant was reagent grade,

**Table 2 - Examples of Compositions Including Solvent Solubilizer and Surfactant Solubilizer**

| Ingredient | F | G | H | I | J | K | L | M | N | O | P | Q |
|---|---|---|---|---|---|---|---|---|---|---|---|---|
| Medium Chain Peroxycarboxylic Acid | 0.8 | 0.7 | 1.1 | 1.1 | 0.9 | 2.1 | 1.6 | 0.7 | 0.9 | 5.0 | not measured | 5.0 |
| Medium Chain Carboxylic Acid | 4.3 | 4.4 | 4.0 | 4.0 | 4.2 | 4.2 | 3.1 | 4.4 | 4.2 | 0.2 | <5 | 0.2 |
| Solvent Solubilizer | 0 | 40 | 40 | 40 | 42 | 44 | 42 | 34 | 29 | 28 | 28 | 28 |
| Surfactant Solubilizer | 45 | 5 | 2 | 5 | 8 | 6 | 7 | 6 | 4 | 6 | 6 | 10 |
| Carrier | 37 | 30 | 33 | 30 | 29 | 21 | 24 | 26 | 28 | 28 | 26 | 24 |
| Oxidizing Agent | 7.0 | 6.9 | 6.8 | 6.9 | 6.1 | 6.4 | 6.5 | 6.7 | 6.5 | 6.9 | 8.7 | 6.9 |
| Acidulant | 5 | 7 | 7 | 7 | 8 | 15 | 15 | 21 | 26 | 25 | 25 | 25 |
| Stabilizing Agent | 1.2 | 6 | 6 | 6 | 1.2 | 1.2 | 1.2 | 1.2 | 1.2 | 1.2 | 1.2 | 1.2 |

**Table 3 - Examples of Compositions Including Surfactant Solubilizer**

| Ingredient | R | S | T | U | V | W | X | Y | Z |
|---|---|---|---|---|---|---|---|---|---|
| Medium Chain Peroxycarboxylic Acid | 0.5 | 0.4 | 1.0 | 1.0 | 0.7 | 3.8 | 3.7 | 3.8 | 3.5 |
| Medium Chain Carboxylic Acid | 4.6 | 4.6 | 3.1 | 3.1 | 3.4 | 2.6 | 2.7 | 2.6 | 2.9 |
| Surfactant Solubilizer | 17 | 20 | 20 | 20 | 20 | 20 | 20 | 20 | 20 |
| Carrier | 32 | 29 | 27 | 27 | 27 | 24 | 24 | 24 | 24 |
| Oxidizing Agent | 8.0 | 8.3 | 9.2 | 9.2 | 9.3 | 8.6 | 8.7 | 8.6 | 8.7 |
| Acidulant | 36 | 36 | 38 | 38 | 38 | 39 | 39 | 39 | 39 |
| Stabilizing Agent | 2.4 | 2.4 | 2.4 | 2.4 | 2.4 | 2.4 | 2.4 | 2.4 | 2.4 |

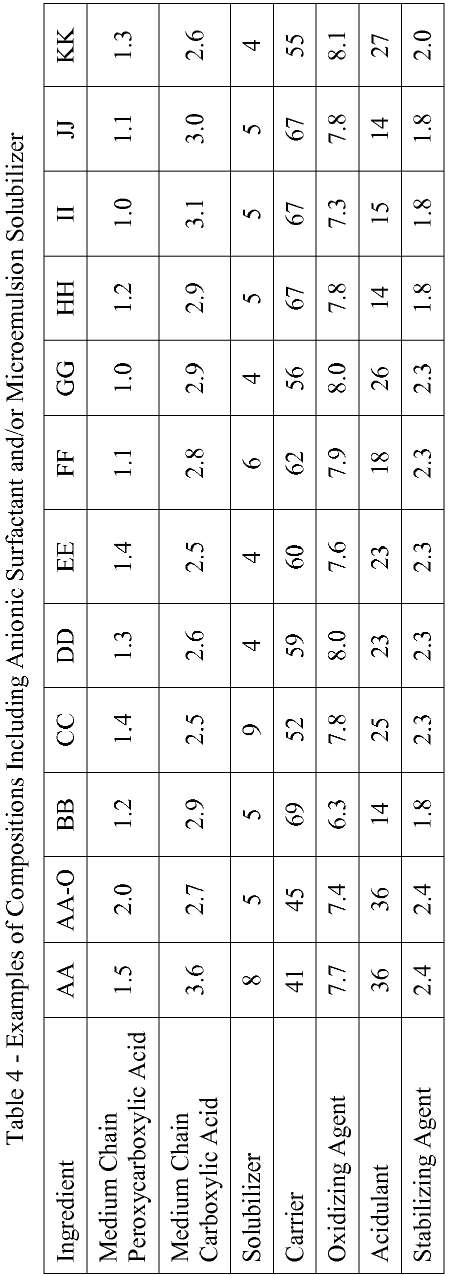

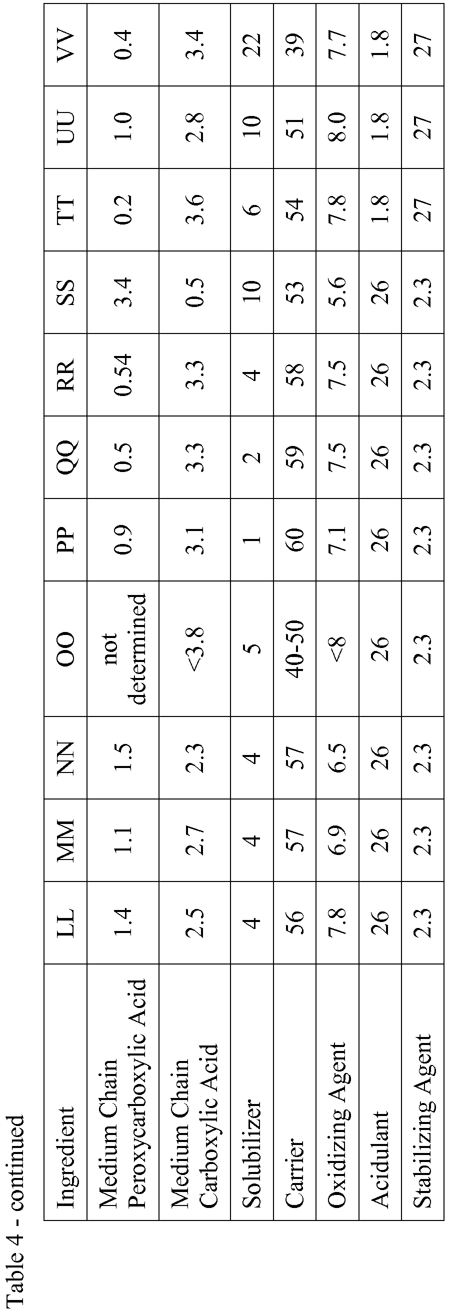

98%, concentrated sulfuric acid (15 wt-%) and phosphoric acid (23 wt-%) (supplied as 75% phosphoric acid). In compositions W, X, Y, and Z, the acidulant was concentrated sulfuric acid (25 wt-%) and phosphoric acid (14 wt-%) (supplied as 75% phosphoric acid).

The solubilizer was varied among these compositions. In composition R, the solubilizer was 1-octane sulfonate (1.9 wt-%) and Tegotens EC-11 (a butoxy capped alcohol ethoxylate, a fast wetting surfactant) (15 wt-%). In compositions S, T, and W the solubilizer was Tegotens EC-11. In compositions U and Y, the solubilizer was Dehypon LS-54 (R(EO)₅(PO)₄, a fast wetting surfactant). In compositions V and Z, the solubilizer was Dehypon LT-104 (a butyl capped alcohol ethoxylate). In composition X, the solubilizer was LF-221 (a butoxy capped alcohol ethoxylate).

In each of compositions AA-VV: the medium chain peroxycarboxylic acid was peroxyoctanoic acid; the medium chain carboxylic acid was octanoic acid; the carrier was water; the oxidizing agent was hydrogen peroxide (supplied as 35% hydrogen peroxide in water); and the stabilizing agent was HEDP (supplied as Dequest 2010, which includes 60 wt-% HEDP).

In each of compositions AA, AA-O, DD, EE, GG, KK, LL, MM, NN, OO, PP, QQ, RR, SS, TT, UU, and VV the acidulant was phosphoric acid (supplied as 75% phosphoric acid). In composition BB, HH the acidulant was concentrated sulfuric acid (reagent grade, 98%). In composition CC, the acidulant was methane sulfonic acid (99.5 % + Aldrich). In composition FF, the acidulant was nitric acid (supplied as 70% nitric acid). In composition II, the acidulant was concentrated sulfuric acid (technical grade, 93%). In composition JJ, the acidulant was sulfuric acid (supplied as 50% sulfuric acid).

The solubilizer was varied among these compositions. In compositions AA, AA-O, BB, CC, DD, FF, LL, HH, II, and JJ, the solubilizer was 1-octane sulfonate. In compositions EE and GG, the solubilizer was 1-octane sulfonate (3.8 wt-%) and Dehypon LS-54 (0.2 wt-%). In composition KK, the solubilizer was 1-octane sulfonate (NAS-FAL). In composition MM, the solubilizer was 1-octane sulfonate (3.8 wt-%) and Barlox 12 (dodecyldimethyl amine oxide, 30% active) (0.25 wt-%). In composition NN, the solubilizer was 1-octane sulfonate (3.8 wt-%) and Barlox 12 (0.5 wt-%). In composition OO, the solubilizer was 1-octane sulfonate (3.8 wt-%) and Barlox 12 (1 wt-%). In compositions PP, QQ, RR, and SS, the solubilizer was LAS-acid. In composition TT, the solubilizer was disodium cocoampho dipropionate (supplied under the tradename Miranol^{®} FBS, which includes 39% solids). In composition UU, the solubilizer was an aminoproprionate betaine (supplied under the tradename Mirataine JC-HA, which includes 42% solids). In composition VV, the solubilizer C12-13 alcohol 4 mole EO carboxylic acid (supplied under the tradename Neodox 23-4, which includes 90% active).

The quantities of medium chain peroxycarboxylic acid were determined in compositions PP, QQ, RR, and SS after 7.5 days at 60 °C.

**Table 5 - Examples of Compositions Including Anionic Surfactant and/or Microemulsion Solubilizer plus Strong Organic Acidulant**

| Ingredient | WW | XX | YY | ZZ | BA |
|---|---|---|---|---|---|
| Medium Chain Peroxycarboxylic Acid | 1.5 | 1.3 | 0.5 | 0.5 | 0.8 |
| Medium Chain Carboxylic Acid | 2.5 | 2.7 | 3.5 | 3.5 | 3.2 |
| Solubilizer | 4 | 4 | 4 | 4 | 4 |
| Carrier | 58 | 58 | 56 | 57 | 71 |
| Oxidizing Agent | 7.7 | 7.6 | 7.7 | 8.1 | 8.2 |
| Acidulant | 24 | 24 | 26 | 25 | 11 |
| Stabilizing Agent | 1.8 | 1.8 | 1.8 | 1.8 | 1.8 |

In each of compositions WW, XX, YY, ZZ, and BA: the medium chain peroxycarboxylic acid was peroxyoctanoic acid; the medium chain carboxylic acid was octanoic acid; the carrier was water; the oxidizing agent was hydrogen peroxide (supplied as 35% hydrogen peroxide in water); the stabilizing agent was HEDP (supplied as Dequest 2010, which includes 60 wt-% HEDP); and the solubilizer was NAS-FAL.

The acidulant was varied among these compositions. In composition WW, the acidulant was hydroxyacetic acid (supplied as 75% hydroxyacetic acid) (19 wt-%) and sulfuric acid (reagent grade, 98%) (5 wt-%). In composition XX, the acidulant was hydroxyacetic acid (supplied as 75% hydroxyacetic acid) (19 wt-%) and methane sulfonic acid (99.5 % + Aldrich) (5 wt-%). In composition YY, the acidulant was hydroxyacetic acid (supplied as 75% hydroxyacetic acid). In composition ZZ, the acidulant was purified hydroxyacetic acid. In composition BA, the acidulant was hydroxypropionic acid (supplied as 22% 3-hydroxypropionic acid).

In these compositions the hydroxycarboxylic acids contributed virtually no solubilization of the medium chain carboxylic acid. The compositions required solubilizer.

### Making the Exemplified Compositions

Table 6 shows the rapid generation of peroxyoctanoic acid achieved in making composition KK.

**Table 6 - Generation of Peroxyoctanoic Acid with Time at Room Temperature and at 120 °F (Composition KK)**

| Minutes at RT | [POOA] wt-% | Minutes at 120 °F | [POOA] wt-% |
|---|---|---|---|
| 11 | 0.61 | 30 | 1.46 |
| 53 | 1.09 | 45 | 1.38 |
| 97 | 1.11 | 60 | 1.23 |
| 130 | 1.1 | 90 | 1.47 |
| 235 | 1.24 | 120 | 1.31 |
| 293 | 1.27 | | |
| 330 | 1.46 | | |
| 366 | 1.39 | | |
| 395 | 1.5 | | |

When a high level of sulfuric acid was used as the acidulant (Examples include B, E, O, and Q), a strong exotherm was obtained, and the medium chain peroxy carboxylic acid was generated rapidly, for example, virtually instantaneously. For some of these compositions, the sulfuric acid needed to be added slowly and with cooling to keep the temperature below 76.7°C (170°F) or below 48.9°C (120°F) Such formulas that can generate medium chain peroxy carboxylic acids, rapidly or almost instantaneously can be employed for on site generation at the use location.

The concentrations of peroxyoctanoic acid reported in the present examples were determined by a well established and standardized titration protocol. First, hydrogen peroxide content was determined by an oxidation-reduction titration with ceric sulfate. After the endpoint of this titration was reached, an excess of potassium iodide was added to the solution. The potassium iodide reacts with peroxycarboxylic acids to liberate iodine. The liberated iodine was titrated with a standard solution of sodium thiosulfate to yield the concentration of peroxycarboxylic acid. The remaining level of carboxylic acid can be calculated.

The octanoic acid employed in the present examples was obtained from sources including Procter & Gamble Chemicals and includes a minimum of 95% octanoic acid with minor amounts of hexanoic acid (ca. 2%), decanoic acid (ca. 2%), and dodecanoic acid (<0.5%).

### Example 2 - - Stability of Compositions Including Medium Chain Peroxycarboxylic Acid and Solubilizer

Compositions according to the present invention were evaluated and demonstrated physical stability and advantageous stability of the medium chain peroxycarboxylic acid.

### Materials and Methods

Several of the present medium chain peroxycarboxylic acid compositions were evaluated for stability of the medium chain peroxycarboxylic acid. A sealed container including the composition was placed in an oven at an elevated temperature or was left at room temperature for a period of time. The temperatures and times are reported in the tables below. One week at 60 °C can be considered equivalent to a year at room temperature (RT). The quantity of peroxycarboxylic acid was determined by titration.

Several of the present medium chain peroxycarboxylic acid compositions were also evaluated for physical stability. The sample were visually inspected at intervals at which peroxycarboxylic acid level was also determined.

### Results

The results obtained for determinations of stability of the medium chain peroxycarboxylic acid and of physical stability are reported below in Tables 7 and 8.

The results presented in Table 7 for compositions M and N indicate that stability of the medium chain peroxycarboxylic acid decreases when phosphoric acid increases from 25 % to 35%. This suggests that the compositions including solvent solubilizer are susceptible to degradation caused by impurities present in the technical grade phosphoric acid.

The results presented in Table 8, specifically the blue tyndall appearance, indicates that each of these compositions was in the form of a microemulsion.

A study of accelerated aging of a mixed peroxycarboxylic acid composition demonstrated that peroxyoctanoic acid in a mixed peracid composition underwent significant degradation at 60 °C in 7 days. After 7 days, three samples underwent 20, 23, and 54 % degradation.

The microemulsion compositions were less susceptible to degradation by impurities. For example, compositions KK and LL included technical grade phosphoric acid and exhibited good stability. In contrast, if phosphoric acid is to be used in conventional formulations of peroxycarboxylic acids, high purity grade is required to avoid unacceptable degradation.

Compositions A, B, C, D, and E were two phase compositions.

**Table 7 - Advantageous Stability of Medium Chain Peroxycarboxylic Acid in the Present Compositions Including Solvent Solubilizer**

| Composition | Starting [POOA] (wt-%) | Days at 100 °F 37.8°C | Wt-% Remaining, 100 °F 37.8 °C | Days at RT | Wt-% Remaining, RT |
|---|---|---|---|---|---|
| A | 1.8 (after 1 day at 100 °F) | 22 | 1 | 46 | 2.3 |
| B | 1.6 | 37 | 0.8 | 37 | 2.1 |
| C | 1.4 | 36 | 0.9 | 36 | 1.3 |
| D | 1.6 | 36 | 0.7 | 36 | 1.4 |
| E | 2.9 | 36 | 0.4 | 36 | 1.8 |
| F | 0.8 | 31 | 1.1 | 31 | 0.9 |
| J | 0.9 (after 3 days at RT) | 33 | 1.2 | 13 | 1.2 |
| K | 2.1 (after 3 days at RT) | 33 | 1.1 | 17 | 2.0 |
| L | 1.6 (after 3 days at RT) | 22 | 1.2 | 13 | 1.5 |
| M | 0.7 | 28 | 1 | 8 | 1.1 |
| N | 0.9 | 28 | 0.7 | 7 | 1.4 |

**Table 8 - Stability of Compositions Including Anionic Surfactant and/or Microemulsion Solubilizer**

| Composition | Starting [POOA] (wt-%) | Days at 60 °C | Wt-% Remaining | Appearance |
|---|---|---|---|---|
| LL | 1.4 (after 1 day at 60 °C) | 7 | 1.4 | 1 phase, hazy blue tyndall |
| HH | 1.2 (after 3 days at 60 °C) | 7 | 1.2 | Blue tyndall gel with no bubbles in solution. Slightly hazy. |
| KK | 1.3 | 7 | 1.3 | 1 phase, hazy blue tyndall |

### Example 3 - - Shear Thinning Viscosity of Compositions Including Medium Chain Peroxycarboxylic Acid and Solubilizer

Compositions according to the present invention were evaluated and demonstrated to have advantageous shear thinning viscosity, which is characteristic of microemulsions.

### Materials and Methods

Several of the present medium chain peroxycarboxylic acid compositions were evaluated for viscosity as a function of rate of spindle rotation using an LVT viscometer and an N2 spindle. The temperature of the compositions was room temperature 23.9°C (75 °F).

### Results

The results obtained for determinations of viscosity of the present compositions are reported below in Table 7. Decreasing viscosity with increasing spindle rotation rate indicates shear thinning, which is characteristic of a microemulsion. Each of the compositions tested showed shear thinning viscosity.

**Table 9 - Shear Thinning Viscosity of Composition LL**

| rpm | Viscosity (cp) | | rpm | Viscosity (cp) |
|---|---|---|---|---|
| 0.6 | 3875 | | 2 | 2260 |
| 1.5 | 2600 | | 2.5 | 1952 |
| 3 | 1700 | | 4 | 1380 |
| 6 | 1300 | | 5 | 1208 |
| 12 | 863 | | 10 | 736 |
| 30 | 483 | | 20 | 468 |
| 60 | 308 | | 50 | 280 |
| | | | 100 | 204 |

**Table 10 - Shear Thinning Viscosity of Composition HH**

| rpm | Viscosity (cp) | | rpm | Viscosity (cp) |
|---|---|---|---|---|
| 0.6 | 7000 | | 2 | 3500 |
| 1.5 | 3500 | | 2.5 | 2848 |
| 3 | 2200 | | 4 | 1950 |
| 6 | 1500 | | 5 | 1648 |
| 12 | 950 | | 10 | 976 |
| 30 | 515 | | 20 | 600 |
| 60 | 315 | | 50 | 324 |
| | | | 100 | 212 |

**Table 11 - Shear Thinning Viscosity of Composition KK**

| rpm | Viscosity (cp) |
|---|---|
| 0.5 | 4080 |
| 1 | 3120 |
| 2 | 2240 |
| 2.5 | 2016 |
| 4 | 1570 |
| 5 | 1344 |
| 10 | 820 |
| 20 | 520 |
| 50 | 320 |
| 100 | 218 |

### Conclusions

The shear thinning viscosity of the present compositions is characteristic of a structured composition, such as a microemulsion.

### Example 4 - - Antimicrobial Efficacy of the Present Compositions Including Medium Chain Peroxycarboxylic Acid and Solubilizer

Compositions according to the present invention were evaluated and demonstrated advantageous antimicrobial activity against microbes such as gram negative bacteria, gram positive bacteria, fungi, spores, viruses, and mycobacteria.

### Materials and Methods

Antimicrobial activity was determined according to two well established methods. The first method was the procedure set out in *Germicidal and Detergent Sanitizing Action of Disinfectants,* Official Methods of Analysis of the Association of Official Analytical Chemists, paragraph 960.09 and applicable sections, 15th Edition, 1990 (EPA Guideline 91-2). The second method was the procedure described in *A.O.A.C. Use Dilution Methods,* Official Methods of Analysis of the Association of Official Analytical Chemists, paragraph 955.14 and applicable sections, 15th Edition, 1990 (EPA Guideline 91-2). Briefly, antimicrobial activity of the present compositions was determined by exposing a one mL aliquot containing the target microorganism to 99 mL of the desired concentration of the test substance at the desired temperature. After the specified contact time, one mL of the test solution containing the microorganism was neutralized and enumerated for survivors.

The hospital disinfectant efficacy of the present compositions was determined by drying the target microorganism on a stainless steel carrier and exposing the carrier to 10 mL of the desired concentration of test composition at the desired temperature for the specified contact time. Then, the carrier was aseptically transferred to a neutralizer/subculture medium.

Antiviral activity against Herpes Simplex Virus Type 1 was determined by known procedures. Briefly: Herpes Simplex Virus Type 1 was dried on a glass surface. The film of virus was exposed to test substance for 10 min at room temperature. Then, the mixture of film and test substance were subjected to gel filtration to separate small molecules from virus particles. The recovered virus was assayed for infectivity by an accepted assay method.

Antiviral activity against Poliovirus Type 1 was determined by known procedures. Briefly: Poliovirus Type 1 was dried on a glass surface. The film of virus was exposed to test substance for 5 min at room temperature. Then, the mixture of film and test substance were subjected to gel filtration to separate small molecules from virus particles. The recovered virus was assayed for infectivity by an accepted assay method.

### Results

Tables 12-21 include data showing that the present medium chain peroxycarboxylic acid compositions had antimicrobial activity when tested against bacteria, fungi, and spores in several different types of tests.

The data presented in Table 12 demonstrate that the present compositions exhibited significant antimicrobial activity when diluted with a diluent to pH less than 4. Efficacy was not as great if the composition was diluted and then the pH was brought to less than or equal to 4. These results illustrate that present compositions with significant levels of acidulant exhibited, under certain circumstances, advantageous activity.

The data presented in Table 13 demonstrate that the present compositions exhibited significant antimicrobial activity at pH of 2.6 to 3.5. These results indicate that at a pH of 6.1, 11 ppm of peroxyoctanoic acid (POOA) is still effective at reducing *S. aureus* by >7.04 log. The data presented in Table 14 demonstrate that efficacy of this composition was not as great against *E. coli* if it was diluted and then the pH was brought to less than 4.

The data presented in Table 15 demonstrate that the present compositions exhibited significant antimicrobial activity. All formulas tested achieved >5 log reductions of *Escherichia coli* in 30 seconds at 0.069% when diluted in 500 ppm synthetic hard water. Also, these compositions achieved complete kill (>7 log reduction) of *Pseudomonas aeruginosa* in 30 seconds at 0.082% when diluted in 500 ppm synthetic hard water. The combination of higher pH and lower ppm in one composition may have contributed to the lower log reduction.

The data presented in Table 16 demonstrate that the present compositions exhibited significant antimicrobial activity against several fungi and bacteria. The present compositions exhibited broad spectrum antimicrobial activity against bacteria and fungi at low levels of medium chain peroxycarboxylic acid. These results indicate that composition 106 is more effective that composition DD. Composition BB achieved higher reductions of *A. niger* and *P. aeruginosa* at similar levels of peroxycarboxylic acid.

The data presented in Table 17 demonstrate that the present compositions exhibited significant antimicrobial activity against several fungi and several bacteria.

The data presented in Table 18 demonstrate that one of the present compositions (KK) exhibited significant antimicrobial activity against *E. coli* 0157:H7, *S*. *typhimurium,* and *L. monocytogenes.* This composition achieved more than 99.999% reduction within a 30 second exposure time.

The data presented in Table 19 demonstrate that the present compositions exhibited significant antimicrobial activity against several bacteria in a hospital disinfectant test. The hospital disinfectant test measures whether the composition killed all of the microbes on a stainless steel carrier. A composition listed as 10/10 killed all of the bacteria on each of 10 carriers. Likewise a result of 60/60 indicates that a composition kills all of the bacteria on each of 60 carriers. These results present a greater challenge for an antimicrobial agent because it requires activity in the presence of 5% fetal bovine serum. Therefore, it indicates that the present compositions were effective as a hospital disinfectant in the presence of blood soil.

The data presented in Table 20 demonstrate that one of the present compositions exhibited superior antimicrobial activity against several bacteria in a hospital disinfectant test compared to a conventional, commercially available antimicrobial agent. The hospital disinfectant test measures whether the composition killed all of the microbes on a particular carrier. The composition according to the present invention, AA-O, passed the hospital disinfectant test, with complete kill on 59 of 60 carriers. The conventional antimicrobial agent (containing hydrogen peroxide as active) did not pass the test. It yielded complete kill on only 58 of 60 carriers. These results indicate that in the presence of fetal bovine serum and when diluted in synthetic hard water the current composition was more effective than the commercially available hospital disinfectant.

The data presented in Table 21 demonstrate that the present compositions exhibited significant antimicrobial activity against bacterial spores. Bacterial spores are difficult to kill. These results indicate that at elevated temperatures the effectiveness of the present compositions increased, which provided for effective kill at reduced contact times.

The data presented in Table 22 demonstrate that the present compositions exhibited superior antimicrobial activity against bacterial spores compared to conventional peroxide and peroxycarboxylic acid antimicrobials. The present composition resulted in greater kill at equal or lower concentrations of antimicrobial active. These results indicate that the present compositions exhibited superior antimicrobial activity compared to conventional antimicrobials.

The data presented in Table 23 demonstrate that the present compositions exhibited effective antimicrobial activity against *Mycobacterium bovis.* The present composition (B) provided complete kill of M. bovis BCG at dilutions of 1 oz per 4 gal and 1 oz per 6 gal with exposure times as short as 6 min. These results indicate that the compositions of the present invention can be employed as a tuberculocidal agent.

Tests against Herpes Simplex Virus Type 1 resulted in complete kill of this virus. The virus was dried onto a hard surface. The virus on the hard surface was contacted for 10 min with composition B diluted at 1 oz per 6 gallons or 1 oz per 8 gallons. Both dilutions resulted in complete kill, a greater than 5.3 log reduction in virus. Virus and cells survived in appropriate controls. These results indicate that the present compositions are effective virucides.

Tests against Poliovirus Type 1 resulted in nearly complete kill of this virus. The virus was dried onto a hard surface. The virus on the hard surface was contacted for 10 min with composition LL diluted at 1 oz per 1 gallon or 1 oz per 0.5 gallons. The dilution of 1 oz to 1 gallon completely killed the poliovirus at 5 different titers, killed no virus at the highest titer, and resulted in incomplete kill at the second and third highest titers. This dilution exhibited 1.5 log reduction in virus titer. The dilution of 1 oz to 0.5 gallons completely killed poliovirus at all titers tested. This dilution resulted in >4 log reduction in virus titer. Virus and cells survived in appropriate controls. These results indicate that the present compositions are effective general virucides.

The data presented in Table 24 demonstrate that the present compositions exhibited antimicrobial activity superior to that of compositions including synthetic medium chain peroxycarboxylic acid that had been added to a composition. Better efficacy was found in the solutions with the lower pH, which were made up with Milli-Q water. The 60 ppm sample almost achieved a 5 log reduction in 30 seconds. However, this data indicates that the pH of the test solution can be more important than the ppm of active POOA.

The data presented in Table 25 demonstrate that the present compositions exhibited antimicrobial activity superior to that of compositions including synthetic medium chain peroxycarboxylic acid that had been added to a composition. These data further suggest that POOA exhibited greater activity against *Escherichia coli* a pH of ∼4.0 and a concentration >5 ppm no matter what diluent is used. Against *Staphylococcus aureus* POOA achieved 5 log reductions at a concentration of 5 ppm and at a pH of ∼5. There was no difference between the reductions seen in Milli-Q water and soft water for either organism.

**Table 12 - Antimicrobial Activity of Compositions Including Solvent Solubilizer Against E. coli and S. aureus with 30 Second Exposure at Room Temperature**

| Composition | [POOA] (ppm) | Diluent | pH | Log Reduction of *E*. *coli* | Log Reduction of *S. aureus* |
|---|---|---|---|---|---|
| | 5 | HW - pH 5.0 | 3.19 | 2.45 | 6.10 |
| | | HW - pH 7.8 | 7.74 | 0.10 | 3.52 |
| F stored at RT for 31 days | | HW - adjusted to pH 4.0 after dosing | 3.98 | 0.10 | 5.62 |
| | 8 | HW - pH 5.0 | 3.03 | 7.15 | >6.70 |
| | | HW - pH 7.8 | 6.16 | 0.07 | 5.62 |
| 0.92% POOA | | HW - adjusted to pH 4.0 after dosing | 4.00 | 0.65 | >6.40 |
| | 12 | HW - pH 5.0 | 2.86 | >7.15 | >6.70 |
| | | HW - pH 7.8 | 4.41 | 0.59 | 6.70 |
| | | HW - adjusted to pH 4.0 after dosing | 3.96 | 2.84 | 6.40 |
| | 7 | HW - pH 5.0 | 3.19 | 1.39 | 5.80 |
| | | HW - pH 7.8 | 6.80 | 0.15 | 2.09 |
| F stored at 100 °F for 31 days | | HW - adjusted to pH 4.0 after dosing | 3.89 | 0.15 | 5.24 |
| | 10 | HW - pH 5.0 | 3.01 | >6.84 | 6.70 |
| | | HW - pH 7.8 | 6.14 | 0.10 | 5.24 |
| 1.13% POOA | | HW - adjusted to pH 4.0 after dosing | 3.89 | 0.39 | 5.49 |
| | 14 | HW - pH 5.0 | 2.85 | >7.15 | >6.70 |
| | | HW - pH 7.8 | 4.28 | 0.28 | >6.40 |
| | | HW - adjusted to pH 4.0 after dosing | 4.07 | 1.40 | 6.22 |

| | | | | | |
|---|---|---|---|---|---|
| HW = 500 ppm synthetic hard water | | | | | |

**Table 13 - Antimicrobial Activity of Compositions Including Solvent Solubilizer Against E. coli and S. aureus with a 30 Second Exposures at Room Temperature - Tests Conducted Using pH Adjusted Synthetic Hard Water**

| Composition | pH of Diluent | pH of Test Substance | Log Reduction of *E*. *coli* | Log Reduction of *S. aureus* |
|---|---|---|---|---|
| K (0.086 wt-%) 16 ppm POOA | 3.9-4.0 | 2.64 | >7.11 | >7.04 |
| | 4.9-5.1 | 2.74 | >7.11 | >7.04 |
| | 5.9-6.1 | 2.75 | >7.11 | >7.04 |
| | 7.7-7.9 | 3.50 | >7.11 | >7.04 |
| K (0.057 wt-%) 11 ppm POOA | 3.9-4.0 | 2.80 | >7.11 | >7.04 |
| | 4.9-5.1 | 2.83 | >7.11 | >7.04 |
| | 5.9-6.1 | 2.97 | >7.11 | >7.04 |
| | 7.7-7.9 | 6.12 | 0.21 | >7.04 |

**Table 14 - Antimicrobial Activity of Compositions Including Solvent Solubilizer Against E. coli and S. aureus with 30 Second Exposure at Room Temperature - Tests Conducted With pH is Adjustment After Dosing**

| Composition | Natural pH | Adjusted pH | Log Reduction of *E*. *coli* | Log Reduction of *S. aureus* |
|---|---|---|---|---|
| K (0.050 wt-%) | 5.09 | 3.91* | 2.84 | >6.84 |
| K (0.057 wt-%) | 4.92 | 3.85** | 4.61 | >6.84 |

| | | | | |
|---|---|---|---|---|
| * 2 drops of 1.0 N HCl ** 5 drops of 1.0 N HCl | | | | |

**Table 15 - Antimicrobial Activity of Compositions Including Anionic Surfactant and/or Microemulsion Solubilizer Against Pseudomonas aeruginosa and Escherichia coli with 30 Second Exposure at Room Temperature to a Composition Made with 500 ppm Synthetic Hard Water at pH 7.60**

| Composition | Use-Solution [POOA] ppm | pH | Log Reduction of *E. coli* | Log Reduction of *P. aeruginosa* |
|---|---|---|---|---|
| T | 13 | 2.9 | 5.16* | Not Tested |
| U | 13 | 3.1 | >7.28 | |
| V | 12 | 3.0 | >7.28 | |
| T | 16 | 2.8 | Not tested | >7.15 |
| U | 16 | 2.8 | | >7.15 |
| V | 15 | 2.9 | | 4.75 |

| | | | | |
|---|---|---|---|---|
| * = Duplicate plate counts were not consistent | | | | |

**Table 16 - Antimicrobial Activity of Compositions Including Anionic Surfactant and/or Microemulsion Solubilizer Against Several Fungi and Pseudomonas aeruginosa with a 30 Second Exposure at Room Temperature**

| Composition | [POOA] (ppm) | Log Kill of *S. cerevisiae,* (30 sec, RT) | Log Kill of *C. albicans,* (30 sec, RT) | Log Kill of *A. niger,* (5 min, RT) | Log Kill of *P. aeruginosa* (30 sec, RT) |
|---|---|---|---|---|---|
| BB | 22 | >5.6 | >6.1 | 1.6 | |
| | 20 | 5.1 | >6.1 | 1.4 | |
| | 18 | 4.7 | >6.1 | 1.2 | >7.2 |
| | 17 | | | | >7.2 |
| | 16 | | | | >7.2 |
| | 15 | 4.1 | 4.2 | 1.0 | >7.2 |
| | 14 | | | | >7.2 |
| | 13 | | | | 4.7 |
| | | | | | |
| DD | 16 | | | 0 | 5.6 |
| | 15 | | | 0 | 3.5 |
| | 14 | | | 0 | 1.8 |
| | 13 | | | 0 | 0.73 |

**Table 17 - Antimicrobial Activity of Compositions Including Anionic Surfactant and/or Microemulsion Solubilizer Against Several Fungi and Several Bacteria with a 30 Second Exposure at Room Temperature**

| Composition | [POOA] (ppm) | Log Kill of *S. cerevisiae,* (30 sec, RT) | Log Kill of *C. albicans,* (30 sec, RT) | Log Kill of *A. niger,* (5 min, RT) | Log Kill of *P. aeruginosa* (30 sec, RT) | Log Kill of *E.coli* O157:H7 (30 sec, RT) | Log Kill *of L. monocytogenes* (30 sec, RT) | Log Kill of *S. aureus* (30 sec, RT) |
|---|---|---|---|---|---|---|---|---|
| LL | 34 | >5.6 | >6.1 | 3.0 | | | | |
| | 30 | >5.6 | >6.1 | 2.3 | | | | |
| | 27 | >5.6 | >6.1 | 1.7 | | | | |
| | 23 | 4.6 | >6.1 | 1.4 | 5 | >7 | >7 | |
| | 21 | | | | | >7 | >7 | |
| | | | | | | | | |
| HH | 26 | >5.4 | >5.8 | 3.4 | | | | |
| | 21 | 4.2 | >5.8 | 2.2 | | | | |
| | 17 | 4.1 | >5.8 | 1.4 | >7.0 | >7* | >7.0 | 6.4 |
| | 16 | | | | >7.0 | >7* | >7.0 | 4.5 |

| | | | | | | | | |
|---|---|---|---|---|---|---|---|---|
| * also killed a less virulent strain of *E. coli*; | | | | | | | | |

**Table 18 - Antimicrobial Activity of Composition Including Anionic Surfactant and/or Microemulsion Solubilizer Against Several Bacteria 30 and 60 Second Exposure at Room Temperature**

| Composition | [POOA] (ppm) | Log Kill of *E. coli* O157:H7, (30 and 60 sec, RT) | Log Kill of *S*. *typhimurium,* (30 and 60 sec, RT) | Log Kill of *L. monocytogenes,* (30 and 60 sec, RT) |
|---|---|---|---|---|
| KK | 17 | >6.9 | >7.2 | >6.6 |

**Table 19 - Antimicrobial Activity of Compositions Including Anionic Surfactant and/or Microemulsion Solubilizer Against Several Bacteria in a Hospital Disinfectant Test**

| Composition | [POOA] (ppm) | *P. aeruginosa* (kill tubes/total tubes) | *S. aureus* (methicillin resistant) (kill tubes/total tubes) | *E. faecalis* (vancomycin resistant) (kill tubes/total tubes) |
|---|---|---|---|---|
| BB | 130 | 60/60 | | |
| | 89 | 59/60 | | |
| | 59 | 60/60 | 10/10 | 10/10 |
| | 44 | 58/60 | 10/10 | 10/10 |
| | | | | |
| DD | 140 | 60/60 | | |
| | 93 | 60/60 | | |
| | 62 | 60/60 | | |
| | 47 | 58/60 | | |
| | | | | |
| LL | 91 | | 10/10 | 10/10 |
| | 68 | | 10/10 | 10/10 |

**Table 20 - Antimicrobial Activity of Composition Including Anionic Surfactant and/or Microemulsion Solubilizer and of Conventional Antimicrobial Composition Against Several Bacteria in a Hospital Disinfectant Test**

| Composition | [POOA] (ppm) | *P. aeruginosa* (kill tubes/total tubes) | *S. aureus* (kill tubes/total tubes) |
|---|---|---|---|
| AA-O (0.98 wt-%) | 196 | 60/60 | 59/60 |
| Virox 5 (1:16 dilution) | 0 | 58/60 | 58/60 |

**Table 21 - Antimicrobial Activity of Compositions Including Anionic Surfactant and/or Microemulsion Solubilizer Against Bacterial Spores**

| Composition | [POOA] (ppm) | Log Kill of *Bacillus cereus* spores (30 sec at 40 °C) | Log Kill of *Bacillus cereus* spores (10 sec at 60 °C) |
|---|---|---|---|
| BB | 200 | 2.1 | 4.7 |
| | 150 | 0.21 | 2.0 |
| HH | 240 | 4.2 | 5.6 |
| | 180 | 0.94 | 2.6 |
| DD | 200 | 4.5 | 6.0 |
| | 150 | 0.53 | 4.1 |
| LL | 290 | 4.7 | 5.7 |
| | 220 | 0.88 | 4.3 |

**Table 22 - Antimicrobial Activity of Compositions Including Anionic Surfactant and/or Microemulsion Solubilizer and of Conventional Compositions Against Bacterial Spores**

| Composition | Concentration of Antimicrobial | pH | Exposure Temperature (°C) | Exposure Time (sec) | Log Reduction |
|---|---|---|---|---|---|
| | | | 40 | 30 | 1.19 |
| | | | | 60 | 2.94 |
| | | | | 120 | >6.30 |
| | | | 60 | 10 | 1.59 |
| H₂O₂ | 35% | 3.32 | | 20 | 4.85 |
| | | | | 30 | 4.89 |
| | | | 80 | 10 | >6.30 |
| | | | | 20 | >6.30 |
| | | | | 30 | >6.30 |
| | | | 40 | 30 | 2.33 |
| | | | | 60 | 6.30 |
| | 250 ppm POOA | | | 120 | >6.30 |
| KK (2.0 wt-%) | 1400 ppm H₂O₂ | | 60 | 10 | 5.30 |
| | 520 ppm OA | 1.85 | | 20 | >6.30 |
| | | | | 30 | >6.30 |
| | | | 80 | 10 | >6.30 |
| | | | | 20 | >6.30 |
| | | | | 30 | >6.30 |
| | | | 40 | 30 | 1.02 |
| | | | | 60 | 2.80 |
| Conventional Mixed Peroxycarboxylic Acid (1.5 wt-%) | 750 ppm peracid | | | 120 | 4.22 |
| | 1000 ppm H2O2 | | 60 | 10 | 3.96 |
| | 555 ppm OA | 3.06 | | 20 | 5.22 |
| | | | | 30 | >6.30 |
| | | | 80 | 10 | >6.30 |
| | | | | 20 | >6.30 |
| | | | | 30 | >6.30 |
| | | | 40 | 30 | 0.30 |
| | | | | 60 | 0.30 |
| Conventional Peroxyacetic Acid (4.5 wt-%) | | | | 120 | 0.75 |
| | 2610 ppm POAA | | 60 | 10 | 0.58 |
| | 1.26% H2O2 | 2.61 | | 20 | 1.85 |
| | | | | 30 | 2.64 |
| | | | 80 | 10 | 4.70 |
| | | | | 20 | >6.30 |
| | | | | 30 | >6.30 |

**Table 23 - Antimicrobial Activity of Compositions Including Solvent Solubilizer Against Mycobacteria**

| Composition | [POOA] (ppm) | Exposure Time at Room Temperature (min) | Log Kill of *M. bovis* |
|---|---|---|---|
| B | 39 | 5 | >6.5 |
| | | 10 | >6.5 |
| | | 15 | >6.5 |
| | | 20 | >6.5 |
| | | | |
| B | 26 | 5 | 6.2 |
| | | 10 | 6.2 |
| | | 15 | >6.5 |
| | | 20 | >6.5 |

**Table 24 - Antimicrobial Activity of Compositions Including POOA from Pure Crystals at 60, 40 and 20 ppm in Milli-Q and Synthetic Hard Water**

| Test Substance | Concentration | Diluent | pH | Log Reduction of E. coli |
|---|---|---|---|---|
| | 60 ppm | 500 ppm Synthetic Hard Water, pH 7.77 | 7.54 | 1.12 |
| | 40 ppm | | 7.61 | 0.93 |
| Pure POOA Crystals | 20 ppm | | 7.68 | 0.62 |
| | 60 ppm | Milli-Q water | 5.08 | 4.68 |
| | 40 ppm | | 5.28 | 2.61 |
| | 20 ppm | | 5.58 | 0.55 |

**Table 25 - Antimicrobial Activity of Compositions Including of POOA from Pure Crystals in Milli-Q and Soft Water at Differing pH Values Against Two Bacteria with a 30 Second Exposure at Room Temperature**

| Test Substance | Concentration | Diluent | Post Test pH | Log Reduction of *E. coli* | Log Reduction of *S. aureus* |
|---|---|---|---|---|---|
| | | Milli-Q water pH 6.60 | 6.24 | 0.09 | 6.04 |
| | | Milli-Q water pH 5.98 | 5.89 | 0.11 | 4.44 |
| | | Milli-Q water pH 5.00 | 5.03 | 0.07 | 5.01 |
| | 5 ppm | Milli-Q water pH 4.04 | 4.09 | 1.34 | 6.28 |
| | | Soft water pH 9.29 | 9.12 | 0.07 | 0.1 |
| | | Soft water pH 5.91* | 6.68 | 0.08 | 4.19 |
| Pure POOA Crystals | | Soft water pH 5.08* | 5.79 | 0.09 | 5.16 |
| | | Soft water pH 3.91 | 4.01 | 1.26 | 5.82 |
| | | Milli-Q water pH 6.60 | 5.80 | 0.06 | >6.82 |
| | | Milli-Q water pH 5.98 | 5.90 | 0.1 | 6.52 |
| | | Milli-Q water pH 5.00 | 4.98 | 0.07 | >6.82 |
| | 10 ppm | Milli-Q water pH 4.04 | 4.08 | 6.04 | >6.82 |
| | | Soft water pH 9.29 | 9.09 | 0.07 | 0.26 |
| | | Soft water pH 5.91 | 6.68 | 0.24 | >6.82 |
| | | Soft water pH 5.08 | 5.67 | 0.55 | 6.12 |
| | | Soft water pH 3.91 | 4.01 | 6.34 | 6.28 |

| | | | | | |
|---|---|---|---|---|---|
| *Indicates a pH drift of ∼0.7 pH units during the 5 hours the test was performed. | | | | | |

### Example 5 - - Compositions Including Medium Chain Peroxycarboxylic Acid and Solubilizer

Table 26 presents additional illustrative examples of the present compositions including medium chain peroxycarboxylic acid and solubilizer. Quantities in the tables are in wt-%.

In each of compositions AB-AQ: the medium chain peroxycarboxylic acid was peroxyoctanoic acid; the medium chain carboxylic acid was octanoic acid; the carrier was water; the oxidizing agent was hydrogen peroxide (supplied from a 35% solution); the stabilizing agent was HEDP (supplied as Dequest 2010 which includes 60 wt-% HEDP); and the acidulant was phosphoric acid (supplied as 75% phosphoric acid). Composition AC included fragrance (1 wt-%), specifically a mint apple fragrance.

The solubilizer was varied among these compositions. In each of compositions AB-AD, AH, AI, AN, the solubilizer was LAS acid. In compositions AE and AJ, the solubilizer was LAS acid plus C8 amine oxide. In composition AF, the solubilizer was LAS acid plus n-octyl amine. In composition AG, the solubilizer was LAS plus C8-dimethyl amine. In composition AK, the solubilizer was LAS acid plus alkylated diphenyl oxide disulfonate (acid form). In composition AL, the solubilizer was alkylated diphenyl oxide disulfonate (acid form). In composition AM, the solubilizer was LAS acid plus alkylated diphenyl oxide disulfonate (acid form) and C8 amine oxide. In composition AO, the solubilizer was sodium laureth sulfate; suitable sodium laureth sulfates tested include those with n=1 and 3. In composition AP, the solubilizer was alkylated diphenyl oxide disulfonate (salt form). In composition AQ, the solubilizer was alkylated diphenyl oxide disulfonate (salt form) plus NAS-FAL.

In each of compositions AR-AW: the carrier was water; the oxidizing agent was hydrogen peroxide (supplied from a 35% solution); the stabilizing agent was HEDP (supplied as Dequest 2010 which includes 60 wt-% HEDP); the acidulant was phosphoric acid (supplied as 75% phosphoric acid), and the solubilizer was LAS acid.

The medium chain peroxycarboxylic acid and medium chain carboxylic acid were varied among these compositions. In composition AR, the medium chain peroxycarboxylic acid was peroxynonanoic acid and the medium chain carboxylic acid was nonanoic acid (straight chain nonanoic acid). In compositions AS-AW, the medium chain

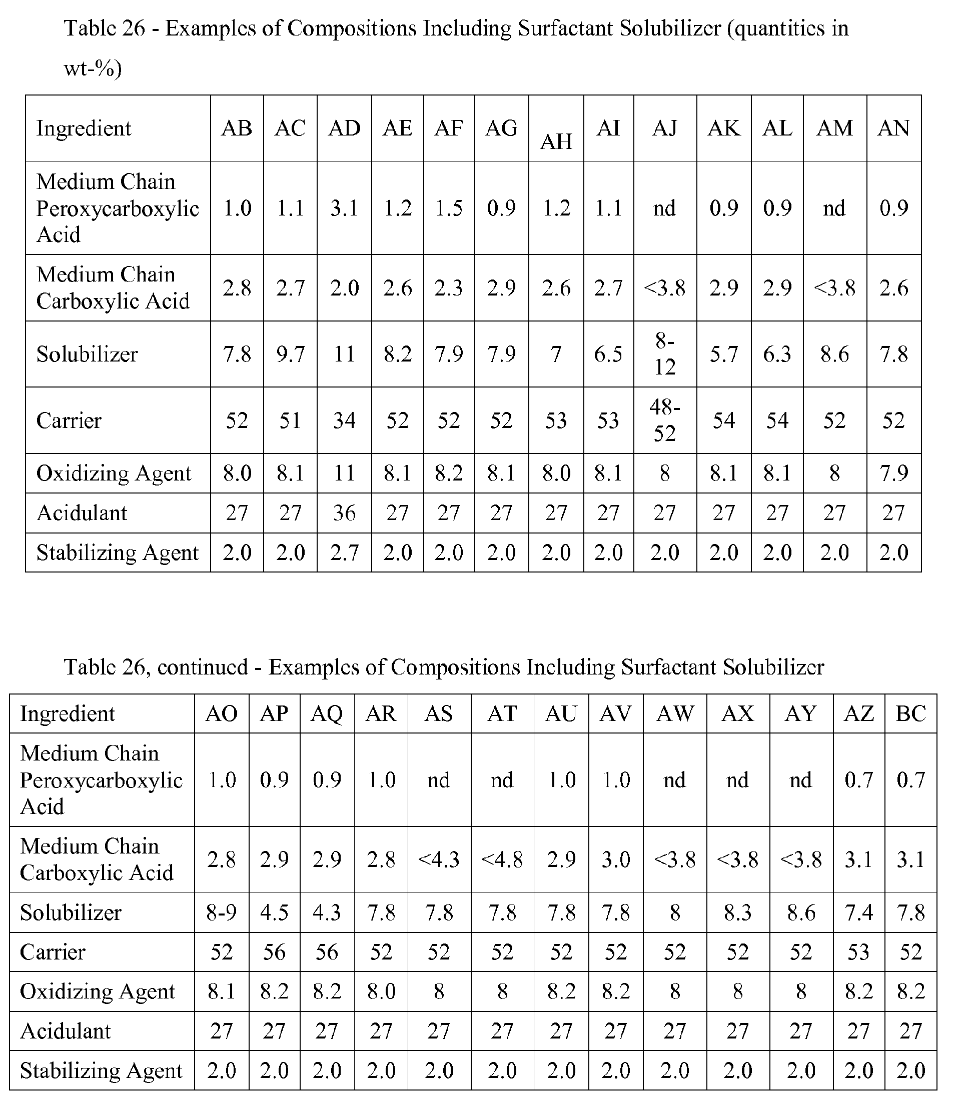

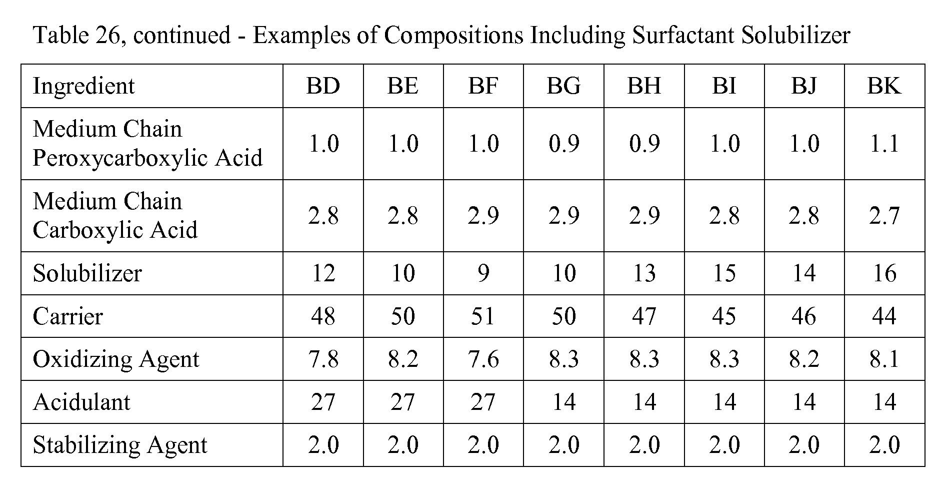

peroxycarboxylic acid was peroxyoctanoic acid and peroxynonanoic acid and the medium chain carboxylic acid was octanoic acid and nonanoic acid; nonanoic acid (as isononanoic acid (which is believed to be a 6 carbon main chain with three pendant methyl groups)) was present at 0.5, 1, 0.1, 0.2, and 0.3 wt-% for AS-AW, respectively.

In each of compositions AX-AZ and BC-BF: the medium chain peroxycarboxylic acid was peroxyoctanoic acid; the medium chain carboxylic acid was octanoic acid; the carrier was water; the oxidizing agent was hydrogen peroxide (supplied from a 35% solution); the stabilizing agent was HEDP (supplied as Dequest 2010 which includes 60 wt-% HEDP); and the acidulant was phosphoric acid (supplied as 75% phosphoric acid).

The solubilizer was varied among these compositions. In composition AX, the solubilizer was LAS acid plus sodium lauryl sulfate. In composition AY, the solubilizer was LAS acid plus sodium lauryl sulfate and C8 dimethyl amine. In compositions AZ and BC-BF, the solubilizer was secondary alkane sulfonate (a mixture of sulfonated paraffins sold under the tradename Hostapur SAS).

In each of compositions BG-BK: the medium chain peroxycarboxylic acid was peroxyoctanoic acid; the medium chain carboxylic acid was octanoic acid; the carrier was water; the oxidizing agent was hydrogen peroxide (supplied from a 35% solution); the stabilizing agent was HEDP (supplied as Dequest 2010 which includes 60 wt-% HEDP); the solubilizer was secondary alkane sulfonate (a mixture of sulfonated paraffins sold under the tradename Hostapur SAS) plus NAS-FAL; and the acidulant was sulfuric acid.

The compositions that included LAS, secondary alkane sulfonate, alkylated diphenyl oxide disulfonate, or sodium lauryl sulfate as solubilizer were foaming compositions. Specifically, compositions AB and AC are foaming compositions

Most of the compositions were phase stable. In particular: Compositions AX and AY were determined to be phase stable at 60 °C. For example, several of the compositions for which the wt-% of medium chain peroxycarboxylic acid was not determined (nd) were not phase stable. That is, they separated into more than one phase after a predetermined time at one or more (e.g., at least one) of 4.4°C (40°F), room temperature, 37.8°C (100°F) or 60°C (140°F).

The concentrations of peroxyoctanoic acid reported in the present examples were determined by a well established and standardized titration protocol. First, hydrogen peroxide content was determined by an oxidation-reduction titration with potassium permanganate. After the endpoint of this titration was reached, an excess of potassium iodide was added to the solution. The potassium iodide reacts with peroxycarboxylic acids to liberate iodine. The liberated iodine was titrated with a standard solution of sodium thiosulfate to yield the concentration of peroxycarboxylic acid. The remaining level of carboxylic acid can be (and was) calculated.

The peroxycarboxylic acid was titrated at a time after formulation that was practical in the laboratory. For example, the peroxycarboxylic acid was titrated for compositions AB, AD, AE, AF, AG, AH, AK, AL, AO, AP, AQ, AU, AV, AZ, BC, and BD after the sample had sat at room temperature for 0, 2 (BD), or 3 (AP, AU, and AV) days. For example, the peroxycarboxylic acid was titrated for compositions AC and BG-BK after the sample had sat at 100 °F for 4 days (AC) or 7 days (BG-BK). For example, the peroxycarboxylic acid was titrated for compositions AI, AN, AR, BE and BF after the sample had sat at 140 °F (60 °C) for 1 day (AI, AR, and BE) or 4 days (AN and BF).

For composition AB, no decomposition of peroxycarboxylic acid was observed upon aging the composition for 7 days at 140 °F (60 °C). For composition AC, no decomposition of peroxycarboxylic acid was observed upon aging the composition for 34 days at 37.8°C (100°F)

Other compositions were also observed to include stable peroxycarboxylic acid.

The octanoic acid employed in the present examples was obtained from sources including Procter & Gamble Chemicals and includes a minimum of 95% octanoic acid with minor amounts of hexanoic acid (ca. 2%), decanoic acid (ca. 2%), and dodecanoic acid (<0.5%).

### Fragrance

Certain of the compositions were evaluated for phase stability and for smell after addition of a fragrance. In particular, compositions AB and AG were evaluated. Fragrances evaluated included Green Meadow (Klabin); Vinegar Mask I (J&E Sozio); Vinegar Mask II (J&E Sozio); amyl acetate; iso-bornyl acetate; and methyl salicylate.

Composition AC included fragrance (1 wt-%), specifically a mint apple fragrance which is believed to be or include an alkyl salicylate. Composition AC altered to include 10 wt-% LAS remained single phase at 4.4°C (40°F) room temperature, and 21.1°C (70°F)

### Foaming

The results in Table 27 show that the present medium chain peroxycarboxylic acid composition produced foam with desirable qualities. This study employed a "FOAM IT" brand tank foamer set to produce slightly wet foam, 2 turns from the mid point. The foam was dispensed from use composition at 35-36.6°C (95-98°F).

The foam was sprayed on a vertical stainless steel surface 4.57 m by 4.57 m (approximately 15 ft by 15 ft) from a distance of 3 m (10 ft).

The results of Table 27 demonstrate that the present compositions provided foam with desirable hang time and density. Each of the compositions tested at 1 oz/ 6 gal. provided foam with desirable characteristics, such as the breaking foam was visible for 5 min, the foam drained well from the vertical surface, exhibited good sheeting down vertical surface, and dried evenly to no visible residue.

### Example 6 - - Antimicrobial Efficacy of the Present Compositions Including Medium Chain Peroxycarboxylic Acid and Solubilizer

Additional compositions according to the present invention were evaluated and demonstrated advantageous antimicrobial activity against microbes such as gram negative bacteria, gram positive bacteria, fungi, spores, viruses, and mycobacteria.

**Table 27 - Foaming by the Present Medium Chain Peroxycarboxylic Acid Compositions.**

| Composition | Amount in Use Solution (oz/gal) | Break Time | Foam Dry Time (min) | Odor | Initial Appearance of Foam | Comments |
|---|---|---|---|---|---|---|
| AB | 0.17 | slow, 2 min | >10 | moderate | Covers well, wet, 1/16 inch thick | foam breaks to spotty foam, dries to no visible residue |
| AG | 0.17 | slow, 2 min | >10 | moderate | Covers well, wet, 1/16 inch thick | foam breaks to spotty foam, dries to no visible residue |
| AH | 0.17 | faster, < 2 min | 95% dry at 10 min | moderate | Covers well, wetter than above | foam breaks to spotty foam, dries to no visible residue |
| AK | 0.17 | fast, 1 min | 95% dry at 10 min | moderate | Wetter than above | no visible residue |
| AY | 0.17 | fast, 10 sec | 95% dry at 10 min | strong | Very wet, lays flat | no visible residue |
| AB | 0.13 | fast, < 1 min | 10 min | low | Covers, wet | spotty foam |
| AG | 0.13 | fast, < 1 min | 10 min | low | Covers, wet | streaky foam |
| AH | 0.13 | very fast, < 1 min | 10 min | low | Extremely wet | very spotty foam |
| AK | 0.13 | very fast, < 1 min | 10 min | low | Extremely wet | very spotty foam |
| AY | 0.13 | fast, 10 sec | 95% dry at 10 min | strong | Very wet, lays flat | no visible residue |

### Materials and Methods

Antimicrobial activity was determined as described above in Example 4.

### Results

Tables 28-29 include data showing that the present medium chain peroxycarboxylic acid compositions had antimicrobial activity when tested against bacteria, fungi, and spores in several different types of tests.

The data presented in Table 28 demonstrate that the present compositions exhibited significant antimicrobial activity. Test 1 included 5 min exposure of the microbe to composition AB at room temperature. The microbes in test 1 included *E*. *aerogenes* ATCC 13048 and *S. aureus* ATCC 6538. Test 2 included 30 sec exposure of the microbe to composition AB at room temperature. The microbes in test 2 included *S. aureus* ATCC 6538, *E. coli* ATCC 11229, and *P. aeruginosa* ATCC 13442.

The data presented in Table 29 demonstrate sporicidal activity of a composition according to the present invention.

Tests against Poliovirus Type 1 resulted in complete kill of this virus. The virus was dried onto a hard surface. The virus on the hard surface was contacted for 10 min with composition AG diluted at 1 oz per 1 gallon or 1 oz per 0.5 gallons. Composition AG demonstrated complete inactivation of Poliovirus type 1 following either 3 min or 5 min exposure at 20 °C. The composition produced >6 and >5.3 log reduction in 3 and 5 min, respectively. Virus and cells survived in appropriate controls. These results indicate that the present compositions are effective general virucides.

The compositions that included fragrance showed no negative effect on antimicrobial efficacy from the fragrance. Several additional compositions were tested for antimicrobial activity and exhibited results similar to those reported in this Example.

**Table 28 - Activity of Composition AB against Several Microorganisms**

| Test | Dilution | Log Reduction of *E. aerogenes* | Log Reduction of *S. aureus* | Log Reduction of *E. coli* | Log Reduction of *P*. *aeruginosa* |
|---|---|---|---|---|---|
| 1 | 500 ppm in synthetic hard water | 4.5 | 5.4 | | |
| 2 | 1 oz/9 gal water | | >6.7 | >7.3 | 5.8 |
| 2 | 1 oz/9.5 gal water | | >6.7 | >7.3 | 5.7 |
| 2 | 1 oz/10 gal water | | >6.7 | >7.3 | 5.2 |
| 2 | 1 oz/10.5 gal water | | >6.7 | >7.3 | 1.7 |

**Table 29 - Activity of Composition KK against Spores of B. subtilis ATCC 49760**

| Composition | Dilution | Exposure Time (min) | Log Reduction of *B. subtilis* spores |
|---|---|---|---|
| KK plus 8 wt-% NAS FAL | 1 oz/6 gal | 30 | 0.5 |
| | | 60 | 0.6 |
| | | 120 | 0.6 |
| KK plus 10 wt-% LAS | 1 oz/6 gal | 30 | 0.8 |
| | | 60 | 1.5 |
| | | 120 | 3.0 |

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

All publications and patent applications in this specification are indicative of the level of ordinary skill in the art to which this invention pertains.

The invention has been described with reference to various specific and preferred embodiments and techniques. However, it should be understood that many variations and modifications may be made while remaining within the scope of the invention.

## Claims

1. An antimicrobial concentrate composition comprising: a medium chain peroxycarboxylic acid composition effective for reducing the microbial burden on a surface of poultry; the composition comprising: 0.5 to 5 wt-% peroxyoctanoic acid;
1 to 10 wt-% octanoic acid;
5 to 76.5 wt-% water;
1 to 20 wt-% anionic surfactant;
5 to 10 wt-% oxidizing agent;
15 to 35 wt-% inorganic acid; and
1 to 5 wt-% sequestrant;
the composition being in the form of a microemulsion.

2. A method of reducing a microbial population on poultry during processing comprising:
applying to the poultry during processing a medium chain peroxycarboxylic acid antimicrobial composition according to claim 1 in an amount and time sufficient to reduce the microbial population.

3. The method of claim 2, wherein the poultry being processed comprises chicken, turkey, ostrich, game hen, squab, guinea fowl, pheasant, duck, goose, emu, or a combination thereof.

4. The method of claim 2, comprising applying the medium chain peroxycarboxylic acid composition by submersing the poultry.

5. The method of claim 4, comprising applying the medium chain peroxycarboxylic acid composition by submersion scalding, by submersion chilling, by hydro-cooling or chilling, tumble immersion, or by a combination thereof.

6. The method of claim 4, comprising applying the medium chain peroxycarboxylic acid composition for a duration and at a concentration selected to yield visually imperceptible darkening of subcutaneous bruises, pooled blood, or a combination thereof.

7. The method of claim 2, comprising applying the medium chain peroxycarboxylic acid composition by rinsing or spraying the poultry.

8. The method of claim 7, comprising applying the medium chain peroxycarboxylic acid composition with a de-feathering picker, by inside-outside bird washing, by dress rinsing, by spray rinsing, or a combination thereof.

9. The method of claim 2, comprising applying medium chain peroxycarboxylic acid composition to a whole poultry carcass.

10. The method of claim 9, comprising applying the medium chain peroxycarboxylic acid composition to a poultry carcass that has been subjected to stunning, bleeding, scalding, picking, singeing, or a combination thereof.

11. The method of claim 2, comprising applying the medium chain peroxycarboxylic acid composition to one or more dismembered parts of a poultry carcass.

12. The method of claim 11, comprising applying the medium chain peroxycarboxylic acid composition to a poultry carcass that has been subjected to beheading, removing feet, eviscerating, neck-cropping, portioning, or a combination thereof.

13. The method of claim 12, comprising applying the medium chain peroxycarboxylic acid composition to a poultry leg, thigh, breast quarter, wing, or combination thereof of a poultry that has been subjected to portioning.

14. The method of claim 11, comprising applying the medium chain peroxycarboxylic acid composition to a poultry that has also been subjected to boning.

15. The method of claim 14, comprising applying the medium chain peroxycarboxylic acid composition to a boned poultry leg, thigh, breast, wings, or combination thereof.

16. The method of claim 2, comprising applying the medium chain peroxycarboxylic acid composition by air chilling.

17. The method of claim 16, wherein air chilling comprises applying a gaseous or densified fluid antimicrobial composition.

18. The method of claim 2, further comprising exposing the poultry to activated light.

19. The method of claim 18, wherein the activated light comprises ultraviolet light, infrared light, visible light, or a combination thereof.

20. The method of claim 2, wherein the microbial population is the result of contamination by fecal matter or digestive tract content.

21. The method of claim 20, wherein the microbial population is reduced in a continuous online process.

22. The method of claim 2, further comprising, after applying:
recovering the applied medium chain peroxycarboxylic acid antimicrobial composition; and
adding to the recovered composition a sufficient amount of a medium chain peroxycarboxylic acid to yield a recycled medium chain peroxycarboxylic acid antimicrobial composition.

23. The method of claim 22, further comprising applying the recycled composition to poultry during processing.

## Patentansprüche

1. Antimikrobielle Konzentrat-Zusammensetzung, umfassend: eine mittelkettige Peroxycarbonsäure enthaltende Zusammensetzung, wirksam zur Verringerung der mikrobiellen Last auf einer Schlachtgeflügel-Oberfläche, wobei die Zusammensetzung umfasst:
0,5 bis 5 Gew.-% Peroxyoctansäure;
1 bis 10 Gew.-% Octansäure;
5 bis 76,5 Gew.-% Wasser;
1 bis 20 Gew.-% anionisches Tensid;
5 bis 10 Gew.-% Oxidationsmittel;
15 bis 35 Gew.-% anorganische Säure; und
1 bis 5 Gew.-% Komplexbildner;
wobei die Zusammensetzung vorliegt in Form einer Mikroemulsion.

2. Verfahren zur Verringerung einer mikrobiellen Population auf Schlachtgeflügel während der Verarbeitung, umfassend:
Anwenden, während der Verarbeitung, einer mittelkettige Peroxycarbonsäure enthaltenden antimikrobiellen Zusammensetzung nach Anspruch 1, in einer Menge und einem Zeitraum, welche ausreichen, die mikrobielle Population zu verringern.

3. Verfahren nach Anspruch 2, wobei das verarbeitete Geflügel umfasst:
Huhn, Truthahn, Strauß, Stubenküken, Täubchen, Perlhuhn, Fasan, Ente, Gans, Emu oder eine Kombination davon.

4. Verfahren nach Anspruch 2, umfassend das Anwenden der mittelkettige Peroxycarbonsäure enthaltenden Zusammensetzung durch Untertauchen des Schlachtgeflügels.

5. Verfahren nach Anspruch 4, umfassend das Anwenden der mittelkettige Peroxycarbonsäure enthaltenden Zusammensetzung durch Tauchbad-Brühen, Tauchbad-Schockkühlung, Sprühkühlung (*Hydro-Cooling*) oder Schockkühlung (*Hydro-Chilling*)*,* Trommel-Tauchbad oder durch eine Kombination davon.

6. Verfahren nach Anspruch 4, umfassend das Anwenden der mittelkettige Peroxycarbonsäure enthaltenden Zusammensetzung für eine Dauer und bei einer Konzentration, welche ausgewählt sind, um optisch nicht wahrnehmbares Dunkelwerden subkutaner Blutergüsse, von Blutansammlungen oder eine Kombination davon zu ergeben.

7. Verfahren nach Anspruch 2, umfassend das Anwenden der mittelkettige Peroxycarbonsäure enthaltenden Zusammensetzung durch Spülen oder Besprühen des Schlachtgeflügels.

8. Verfahren nach Anspruch 7, umfassend das Anwenden der mittelkettige Peroxycarbonsäure enthaltenden Zusammensetzung mit einer Geflügelrupfvorrichtung, durch innere und äußere Waschung des Vogels, durch Abspülen von Gefieder- und Follikelresten (*Dress Rinsing*)*,* durch Sprühspülung, oder eine Kombination davon

9. Verfahren nach Anspruch 2, umfassend das Anwenden der mittelkettige Peroxycarbonsäure enthaltenden Zusammensetzung auf eine ganze Geflügelkarkasse.

10. Verfahren nach Anspruch 9, umfassend das Anwenden der mittelkettige Peroxycarbonsäure enthaltenden Zusammensetzung auf eine Geflügelkarkasse, welche Betäubung, Ausbluten, Brühe, Rupfen, Sengen oder einer Kombination davon unterworfen wurde.

11. Verfahren nach Anspruch 2, umfassend das Anwenden der mittelkettige Peroxycarbonsäure enthaltenden Zusammensetzung auf ein oder mehrere durch Zerlegung erhaltene Teile einer Geflügelkarkasse,

12. Verfahren nach Anspruch 11, umfassend das Anwenden der mittelkettige Peroxycarbonsäure enthaltenden Zusammensetzung auf eine Geflügelkarkasse, welche Enthauptung, Entfernung der Füße, Ausweiden, Halsentfernung, Zerteilen oder einer Kombination davon unterworfen wurde.

13. Verfahren nach Anspruch 12, umfassend das Anwenden der mittelkettige Peroxycarbonsäure enthaltenden Zusammensetzung auf ein Geflügelbein, -schenkel, -brustviertel, -flügel, oder einer Kombination davon, eines Schlachtgeflügel, welches einer Zerteilung unterworfen wurde.

14. Verfahren nach Anspruch 11, umfassend das Anwenden der mittelkettige Peroxycarbonsäure enthaltenden Zusammensetzung auf Schlachtgeflügel, welches außerdem einer Entbeinung unterworfen wurde.

15. Verfahren nach Anspruch 14, umfassend das Anwenden der mittelkettige Peroxycarbonsäure enthaltenden Zusammensetzung auf ein entbeintes Geflügelbein, -schenkel, -brust, -flügel oder eine Kombination davon.

16. Verfahren nach Anspruch 2, umfassend das Anwenden der mittelkettige Peroxycarbonsäure enthaltenden Zusammensetzung mittels Schockkühlung durch Luft.

17. Verfahren nach Anspruch 16, wobei das Schockkühlen durch Luft das Anwenden einer gasförmigen oder verdichteten, fluiden antimikrobiellen Zusammensetzung umfasst.

18. Verfahren nach Anspruch 2, ferner umfassend das Belichten des Schlachtgeflügels mit aktiviertem Licht.

19. Verfahren nach Anspruch 18, wobei das aktivierte Licht Ultraviolettlicht, Infrarotlicht, sichtbares Licht oder eine Kombination davon umfasst.

20. Verfahren nach Anspruch 2, wobei die mikrobielle Population die Folge einer Kontamination durch Fäkalien oder durch Inhalte des Verdauungstrakts ist.

21. Verfahren nach Anspruch 20, wobei die mikrobielle Population verringert wird in einem kontinuierlichen Online-Prozess.

22. Verfahren nach Anspruch 2, ferner umfassend, nach dem Anwenden:
die Rückgewinnung der angewendeten, mittelkettige Peroxycarbonsäure enthaltenden antimikrobiellen Zusammensetzung; und
Zugabe einer ausreichenden Menge einer mittelkettigen Peroxycarbonsäure zu der zurückgewonnenen Zusammensetzung, um eine wiederaufbereitete, mittelkettige Peroxycarbonsäure enthaltende antimikrobielle Zusammensetzung zu ergeben.

23. Verfahren nach Anspruch 22, ferner umfassend das Anwenden der wiederaufbereiteten Zusammensetzung auf Schlachtgeflügel während der Verarbeitung.

## Revendications

1. Composition concentrée antimicrobienne comprenant : une composition d'acide peroxycarboxylique à chaîne moyenne efficace pour réduire la charge microbienne sur une surface de volaille ; la composition comprenant :
0,5 à 5 % en poids d'acide peroxyoctanoïque ;
1 à 10 % en poids d'acide octanoïque ;
5 à 76,5 % en poids d'eau ;
1 à 20 % en poids d'un tensioactif anionique ;
5 à 10 % en poids d'un agent oxydant ;
15 à 35 % en poids d'un acide inorganique ; et
1 à 5 % en poids d'un séquestrant ;
la composition étant sous la forme d'une micro-émulsion.

2. Procédé de réduction d'une population microbienne sur une volaille lors de sa transformation comprenant :
l'application sur la volaille lors de sa transformation d'une composition antimicrobienne d'acide peroxycarboxylique à chaîne moyenne selon la revendication 1 en une quantité et pendant une durée suffisantes pour réduire la population microbienne.

3. Procédé selon la revendication 2, dans lequel la volaille qui est transformée comprend un poulet, une dinde, une autruche, un gibier à plumes, un pigeonneau, une pintade, un faisan, un canard, une oie, un émeu, ou une combinaison de ceux-ci.

4. Procédé selon la revendication 2, comprenant l'application de la composition d'acide peroxycarboxylique à chaîne moyenne par la submersion de la volaille.

5. Procédé selon la revendication 4, comprenant l'application de la composition d'acide peroxycarboxylique à chaîne moyenne par échaudage par submersion, par refroidissement par submersion, par refroidissement dans l'eau glacée, par immersion par culbutage, ou par une combinaison de ceux-ci.

6. Procédé selon la revendication 4, comprenant l'application de la composition d'acide peroxycarboxylique à chaîne moyenne pendant une durée et à une concentration sélectionnées pour donner un noircissement visuellement perceptible des contusions sous-cutanées, des amas sanguins, ou une combinaison de ceux-ci.

7. Procédé selon la revendication 2, comprenant l'application de la compositions d'acide peroxycarboxylique à chaîne moyenne par rinçage ou pulvérisation de la volaille.

8. Procédé selon la revendication 7, comprenant l'application de la composition d'acide peroxycarboxylique à chaîne moyenne avec un dispositif de plumaison, par lavage interne et externe de l'oiseau, par rinçage de la robe, par rinçage par pulvérisation, ou une combinaison de ceux-ci.

9. Procédé selon la revendication 2, comprenant l'application de la composition d'acide peroxycarboxylique à chaîne moyenne sur toute la carcasse de la volaille.

10. Procédé selon la revendication 9, comprenant l'application de la composition d'acide peroxycarboxylique à chaîne moyenne sur une carcasse de volaille qui a été soumise à un étourdissement, à une saignée, à un échaudage, à un arrachage, à un flambage, ou une combinaison de ceux-ci.

11. Procédé selon la revendication 2, comprenant l'application de la composition d'acide peroxycarboxylique à chaîne moyenne sur une ou plusieurs parties démembrées d'une carcasse de volaille.

12. Procédé selon la revendication 11, comprenant l'application de la composition d'acide peroxycarboxylique à chaîne moyenne sur une carcasse de volaille qui a été soumise à une décapitation, à une élimination des pattes, à une éviscération, à une découpe du cou, à une division en portions, ou une combinaison de celles-ci.

13. Procédé selon la revendication 12, comprenant l'application de la composition d'acide peroxycarboxylique à chaîne moyenne sur une patte, une cuisse, un quartier de blanc, une aile de volaille, ou une combinaison de ceux-ci, d'une volaille qui a été soumise à une division en portions.

14. Procédé selon la revendication 11, comprenant l'application de la composition d'acide peroxycarboxylique à chaîne moyenne sur une volaille qui a également été soumise à un désossage.

15. Procédé selon la revendication 14, comprenait l'application de la composition d'acide peroxy-carboxylique à chaîne moyenne sur une patte, une cuisse, un blanc, les ailes d'une volaille désossée, ou une combinaison de ceux-ci.

16. Procédé selon la revendication 2, comprenant l'application de la composition d'acide peroxycarboxylique à chaîne moyenne par refroidissement à l'air.

17. Procédé selon la revendication 16, dans lequel le refroidissement à l'air comprend l'application d'une composition antimicrobienne fluide gazeuse ou densifiée.

18. Procédé selon la revendication 2, comprenant en outre l'exposition de la volaille à une lumière activée.

19. Procédé selon la revendication 18, dans lequel la lumière activée comprend une lumière ultraviolette, une lumière infrarouge, une lumière visible, ou une combinaison de celles-ci.

20. Procédé selon la revendication 2, dans lequel la population microbienne est le résultat d'une contamination par des matières fécales ou le contenu du tube digestif.

21. Procédé selon la revendication 20, dans lequel la population microbienne est réduite dans un procédé continu en ligne.

22. Procédé selon la revendication 2, comprenant en outre, après l'application :
la récupération de la composition antimicrobienne d'acide peroxycarboxylique à chaîne moyenne appliquée ; et
l'ajout à la composition récupérée d'une quantité suffisante d'un acide peroxycarboxylique à chaîne moyenne pour donner une composition antimicrobienne d'acide peroxycarboxylique à chaîne moyenne recyclée.

23. Procédé selon la revendication 22, comprenant en outre l'application de la composition recyclée sur une volaille lors de sa transformation.
